(19) **Europäisches Patentamt**
**European Patent Office**
**Office européen des brevets**

(11) **EP 2 283 097 B1**

(12) **EUROPEAN PATENT SPECIFICATION**

(45) Date of publication and mention
of the grant of the patent:
**30.10.2019 Bulletin 2019/44**

(21) Application number: **09759197.8**

(22) Date of filing: **02.06.2009**

(51) Int Cl.:
**C09J 7/30** (2018.01)

(86) International application number:
**PCT/US2009/045898**

(87) International publication number:
**WO 2009/149036 (10.12.2009 Gazette 2009/50)**

(54) **PRESSURE SENSITIVE ADHESIVE COMPOSITIONS AND METHOD OF MAKING THE SAME**

HAFTKLEBERZUSAMMENSETZUNGEN UND VERFAHREN ZU IHRER HERSTELLUNG

COMPOSITIONS D'ADHÉSIF SENSIBLES À UNE PRESSION ET PROCÉDÉ DE FABRICATION DE CELLES-CI

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **03.06.2008 US 58344 P**

(43) Date of publication of application:
**16.02.2011 Bulletin 2011/07**

(73) Proprietor: **Dow Global Technologies LLC**
**Midland, MI 48674 (US)**

(72) Inventors:
 • **ERDEM, Bedri**
  **Midland**
  **MI 48640 (US)**
 • **BHATTACHARJEE, Debkumar**
  **Lake Jackson**
  **TX 77566 (US)**

 • **ANDES, Keith**
  **Apex**
  **NC 27502 (US)**

(74) Representative: **Boult Wade Tennant LLP**
 **5th Floor, Salisbury Square House**
 **8, Salisbury Square**
 **London EC4Y 8AP (GB)**

(56) References cited:
 **EP-A- 0 849 295        WO-A-01/48026**
 **WO-A-2008/083991      US-A1- 2003 091 778**

 • **DATABASE WPI Week 200135 Thomson Scientific, London, GB; AN 2001-331389 XP002540695 & JP 2001 011146 A (NITTO DENKO CORP) 16 January 2001 (2001-01-16)**
 • **DATABASE WPI Week 200508 Thomson Scientific, London, GB; AN 2005-068464 XP002540658 & JP 2004 359887 A (TOPPAN FORMS CO LTD) 24 December 2004 (2004-12-24)**

EP 2 283 097 B1

## Description

### Field of Invention

The instant invention relates to pressure sensitive adhesive compositions, and method of making the same.

### Background of the Invention

The use of pressure sensitive adhesives in different end-use applications is generally known. For example, such pressure sensitive adhesives are used in the familiar yellow note pads in The United States of America under the Trademark "Post-it" by 3M. Therein, a note page from the pad can be affixed and then easily removed from a surface by means of the pressure sensitive adhesive strip on the back of the note page. Such pressure sensitive adhesives may also be employed to facilitate the bonding of flooring tiles and carpets to the ground, packaging, posters, labeling upon various substrates, road signs, and the like.

JP-A-2004/359887 discloses a pressure sensitive adhesive composition that comprises a natural rubber based latex and a urethane resin.

JP-A-2001/011146 discloses a polyurethane based tacky dispersion, said polyurethane being the reaction product of a polyol and a polyisocyanate.

Despite the research efforts in developing pressure sensitive adhesive compositions, there is still a need for a pressure sensitive adhesive composition with improved balance of properties such as shear, tack, and peel as well as improving the drying time. In addition, there is still a need for a method of making a pressure sensitive adhesive composition with improved properties such as balance of properties such as shear, tack, and peel as well as improving the drying time.

### Summary of the Invention

The instant invention relates to pressure sensitive adhesive compositions, and method of making the same. The pressure sensitive adhesive composition according to the instant invention comprises a pressure sensitive adhesive composition comprising: an ultra-high solid polyurethane dispersion comprising:

a first component, wherein said first component comprises a first polyurethane prepolymer comprising the reaction product of a polyol and polyisocyanate;
a second component, wherein said second component comprises a media phase selected from the group consisting of a seed latex, wherein said seed latex is selected from the group consisting of emulsions of polyvinyl acetate, polyethylene-vinyl acetate, polyacrylic or polyacrylic-styrenic; latexes of polystyrene-butadiene, polyacrylonitrile-butadiene, or polyacrylic-butadiene; aqueous dispersions of polyethylene and polyolefin ionomers; or various aqueous dispersions of polyurethane, polyester, polyamide, epoxy resin, copolymers thereof, or alloys thereof; and
a chain extender, wherein the chain extender comprises a diamine;
wherein said ultra-high solid polyurethane dispersion having a solid content of at least 60 percent by weight of solid content, excluding the weight of any filler, based on the total weight of said ultra-high solid polyurethane dispersion, and a viscosity of less than 5 Pa.s (5000 cps) at 20 rpm at 21° C using spindle #4 with Brookfield viscometer.

The pressure sensitive adhesive composition may further include optionally one or more surfactants, optionally one or more dispersants, optionally one or more thickeners, optionally one or more pigments, optionally one or more fillers, optionally one or more freeze-thaw agent, optionally one or more neutralizing agents, optionally one or more plasticizers, optionally one or more tackifiers, optionally one or more adhesion promoters, and/or optionally combinations thereof.

In an alternative embodiment, the instant invention provides a composition, in accordance with any of the preceding embodiments, except that the pressure sensitive adhesive composition further comprises one or more surfactants, one or more dispersants, one or more thickeners, one or more pigments, one or more fillers, one or more freeze-thaw agent, one or more neutralizing agents, one or more plasticizers, one or more antioxidants, one or more UV stabilizers, one or more tackifiers, one or more adhesion promoters, and/or combinations thereof.

In an alternative embodiment, the instant invention provides a composition, in accordance with any of the preceding embodiments, except that the pressure sensitive adhesive composition comprises 25 to less than 100 percent by weight of said ultra-high solid polyurethane dispersion, based on the weight of the pressure sensitive adhesive composition.

In an alternative embodiment, the instant invention provides a composition, in accordance with any of the preceding embodiments, except that the pressure sensitive adhesive composition comprising 0.1 to 5 percent by weight of said one or more surfactants.

In an alternative embodiment, the instant invention provides a composition, in accordance with any of the preceding embodiments, except that the pressure sensitive adhesive composition comprises 0.1 to 5 percent by weight of said one or more dispersants.

In an alternative embodiment, the instant invention provides a composition, in accordance with any of the preceding embodiments, except that the pressure sensitive adhesive composition comprises 0.1 to 5 percent by weight of said one or more thickeners.

In an alternative embodiment, the instant invention provides a composition, in accordance with any of the preceding embodiments, except that the pressure sensitive adhesive composition comprises 0 to less than 10 percent by weight of said one or more pigments.

In an alternative embodiment, the instant invention provides a composition, in accordance with any of the preceding embodiments, except that the pressure sensitive adhesive composition comprising 0 to 75 percent by weight of said one or more fillers.

In an alternative embodiment, the instant invention provides a composition, in accordance with any of the preceding embodiments, except that the pressure sensitive adhesive composition comprises 0.1 to 2 percent by weight of said one or more freeze-thaw agents.

In an alternative embodiment, the instant invention provides a composition, in accordance with any of the preceding embodiments, except that the pressure sensitive adhesive composition comprises 0.1 to 1 percent by weight of said one or more neutralizing agents.

In an alternative embodiment, the instant invention provides a composition, in accordance with any of the preceding embodiments, except that the pressure sensitive adhesive composition comprises less than 40 percent by weight of said one or more plasticizers.

In an alternative embodiment, the instant invention provides a composition, in accordance with any of the preceding embodiments, except that the pressure sensitive adhesive composition comprises less than 50 percent by weight of said one or more tackifier.

In an alternative embodiment, the instant invention provides a composition, in accordance with any of the preceding embodiments, except that the pressure sensitive adhesive composition comprises less than 5 percent by weight of said one or more adhesion promoters.

In an alternative embodiment, the instant invention provides a composition, in accordance with any of the preceding embodiments, except that the first component comprises one or more first polymer resins and the second component comprises one or more second polymer resins, and wherein the first polymer resin and the second polymer resin have a volume average particle size ratio in the range of 1:5 to 1:2.

In an alternative embodiment, the instant invention provides a composition, in accordance with any of the preceding embodiments, except that the first polymer resin and the second polymer resin have a volume average particle size ratio in the range of about 1:3.

In an alternative embodiment, the instant invention provides a composition, in accordance with any of the preceding embodiments, except that the ultra-high solid content of the polyurethane dispersion comprises 20 to 40 percent by weight of the one or more first polymer resins having a particle size in the range of 0.04 $\mu$m (micron) to 5.0 $\mu$m (micron), and 60 to 80 percent by weight of the one or more second polymer resins having a particle size in the range of 0.05 $\mu$m (micron) to 5.0 $\mu$m (micron), based on the total weight of the one or more first polymer resins and the one or more second polymer resins.

In an alternative embodiment, the instant invention provides a composition, in accordance with any of the preceding embodiments, except that the polyisocyanate is aromatic or aliphatic.

In an alternative embodiment, the instant invention provides a composition, in accordance with any of the preceding embodiments, except that the first polyurethane prepolymer is ionic or non-ionic.

In an alternative embodiment, the instant invention provides a composition, in accordance with any of the preceding embodiments, except that the first polyurethane prepolymer is isocyanate terminated or hydroxyl terminated.

In an alternative embodiment, the instant invention provides a composition, in accordance with any of the preceding embodiments, except that the natural oil based polyol has a functionality in the range of 1.5 to3.

In an alternative embodiment, the instant invention provides a composition, in accordance with any of the preceding embodiments, except that the natural oil based polyol has a functionality in the range of 1.8 to3.

In an alternative embodiment, the instant invention provides a composition, in accordance with any of the preceding embodiments, except that the natural oil based polyol has a functionality in the range of 1.8 to2.2.

In an alternative embodiment, the instant invention provides a composition, in accordance with any of the preceding embodiments, except that the natural oil based polyol has a functionality of about 2.

In an alternative embodiment, the instant invention provides a composition, in accordance with any of the preceding embodiments, except that the natural oil based polyol is blended with one or more conventional polyol.

In an alternative embodiment, the instant invention provides a composition, in accordance with any of the preceding embodiments, except that the natural oil based polyol has a molecular weight in the range of 1000 to 8000 g/mole.

In an alternative embodiment, the instant invention provides a composition, in accordance with any of the preceding embodiments, except that the polyol has a molecular weight in the range of 2000 to 12000 g/mole.

**Brief Description of the Drawings**

For the purpose of illustrating the invention, there is shown in the drawings an exemplary form; it being understood, however, that this invention is not limited to the precise arrangements and instrumentalities shown.

**Fig. 1** is a block diagram illustrating a method of making an ultra-high solid content polyurethane dispersion suitable for pressure sensitive adhesive applications;

**Fig. 2** is a block diagram illustrating a first alternative method of making an ultra-high solid content polyurethane dispersion suitable for pressure sensitive adhesive applications; and

**Fig. 3** is a block diagram illustrating a second alternative method of making an ultra-high solid content polyurethane dispersion suitable for pressure sensitive adhesive applications.

**Detailed Description of the Invention**

The instant invention is a pressure sensitive adhesive composition. The instant invention is a pressure sensitive adhesive composition comprising an ultra-high solid polyurethane dispersion. The ultra-high solid polyurethane dispersion comprises a pressure sensitive adhesive composition comprising:
an ultra-high solid polyurethane dispersion comprising:

a first component, wherein said first component comprises a first polyurethane prepolymer comprising the reaction product of a polyol and polyisocyanate;
a second component, wherein said second component comprises a media phase selected from the group consisting of a seed latex, wherein said seed latex is selected from the group consisting of emulsions of polyvinyl acetate, polyethylene-vinyl acetate, polyacrylic or polyacrylic-styrenic; latexes of polystyrene-butadiene, polyacrylonitrile-butadiene, or polyacrylic-butadiene; aqueous dispersions of polyethylene and polyolefin ionomers; or various aqueous dispersions of polyurethane, polyester, polyamide, epoxy resin, copolymers thereof, or alloys thereof; and
a chain extender, wherein the chain extender comprises a diamine;
wherein said ultra-high solid polyurethane dispersion having a solid content of at least 60 percent by weight of solid content, excluding the weight of any filler, based on the total weight of said ultra-high solid polyurethane dispersion, and a viscosity of less than 5 Pa.s (5000 cps) at 20 rpm at 21° C using spindle #4 with Brookfield viscometer.

The pressure sensitive adhesive composition may further include optionally one or more surfactants, optionally one or more dispersants, optionally one or more thickeners, optionally one or more pigments, optionally one or more fillers, optionally one or more freeze-thaw agent, optionally one or more neutralizing agents, optionally one or more plasticizers, optionally one or more tackifiers, optionally one or more adhesion promoters, and/or optionally combinations thereof.

The terms "polyurethane" and "poly (urea-urethane)," as used herein, may be used interchangeably.

The pressure sensitive adhesive composition comprises an ultra-high solid content polyurethane dispersion, as described in further details hereinbelow. The pressure sensitive adhesive composition may further include optionally one or more surfactants, optionally one or more dispersants, optionally one or more thickeners, optionally one or more pigments, optionally one or more fillers, optionally one or more freeze-thaw agent, optionally one or more neutralizing agents, optionally one or more plasticizers, optionally one or more adhesion promoters, and/or optionally combinations thereof. The pressure sensitive adhesive composition may further include any other additives. Other exemplary additives include, but are not limited to, mildewcides, fungicides.

The pressure sensitive adhesive composition may further include optionally one or more surfactants. The pressure sensitive adhesive composition may comprise 0.1 to 5 percent by weight of one or more surfactants. All individual values and subranges from 0.1 to 5 weight percent are included herein and disclosed herein; for example, the weight percent of surfactant can be from a lower limit of 0.1, 0.2, 0.3, or 0.5 weight percent to an upper limit of 1, 2, 3, 4, or 5 weight percent. For example, pressure sensitive adhesive composition may comprise 0.1 to 4 percent by weight of one or more surfactants; or in the alternative, pressure sensitive adhesive composition may comprise 0.1 to 3 percent by weight of one or more surfactants; or in the alternative, pressure sensitive adhesive composition may comprise 0.1 to 2 percent by weight of one or more surfactants; or in the alternative, pressure sensitive adhesive composition may comprise 0.1 to 1 percent by weight of one or more surfactants. Such surfactants include, but are not limited to, Triton™ X-405 from the Dow Chemical Company, Midland, Michigan.

The pressure sensitive adhesive composition may further include optionally one or more dispersants. The pressure sensitive adhesive composition may comprise 0.1 to 5 percent by weight of one or more dispersants. All individual values and subranges from 0.1 to 5 weight percent are included herein and disclosed herein; for example, the weight percent of dispersants can be from a lower limit of 0.1, 0.2, 0.3, or 0.5 weight percent to an upper limit of 1, 2, 3, 4, or 5 weight percent. For example, pressure sensitive adhesive composition may comprise 0.1 to 4 percent by weight of one or more dispersants; or in the alternative, pressure sensitive adhesive composition may comprise 0.1 to 3 percent by weight of one or more dispersants; or in the alternative, pressure sensitive adhesive composition may comprise 0.1 to 2 percent by weight of one or more dispersants; or in the alternative, pressure sensitive adhesive composition may comprise 0.1 to 1 percent by weight of one or more dispersants. Such surfactants are commercially available under the tradename Tamol™ from Rohm and Has, Philadelphia, USA.

The pressure sensitive adhesive composition may further include optionally one or more thickeners. The pressure sensitive adhesive composition may comprise 0.1 to 5 percent by weight of one or more thickeners. All individual values and subranges from 0.1 to 5 weight percent are included herein and disclosed herein; for example, the weight percent of thickeners can be from a lower limit of 0.1, 0.2, 0.3, or 0.5 weight percent to an upper limit of 1, 2, 3, 4, or 5 weight percent. For example, pressure sensitive adhesive composition may comprise 0.1 to 4 percent by weight of one or more thickeners; or in the alternative, pressure sensitive adhesive composition may comprise 0.1 to 3 percent by weight of one or more thickeners; or in the alternative, pressure sensitive adhesive composition may comprise 0.1 to 2 percent by weight of one or more thickeners; or in the alternative, pressure sensitive adhesive composition may comprise 0.1 to 1 percent by weight of one or more thickeners. Such thickeners are commercially available under the tradename UCAR™ or Celosize ™ from the Dow Chemical Company, Midland, Michigan.

The pressure sensitive adhesive composition may further include optionally one or more pigments. The pressure sensitive adhesive composition may comprise 0 to 10 percent by weight of one or more pigments. All individual values and subranges from 0 to 10 weight percent are included herein and disclosed herein; for example, the weight percent of pigments can be from a lower limit of 0.1, 0.2, 0.3, 0.5, 1, 2, 3, 4, or 5 weight percent to an upper limit of 1, 2, 3, 4, 5, 6, 7, 8, 9, or 10 weight percent. For example, pressure sensitive adhesive composition may comprise 0 to 9 percent by weight of one or more pigments; or in the alternative, pressure sensitive adhesive composition may comprise 0.1 to 8 percent by weight of one or more pigments; or in the alternative, pressure sensitive adhesive composition may comprise 0.1 to 7 percent by weight of one or more pigments; or in the alternative, pressure sensitive adhesive composition may comprise 0.1 to 6 percent by weight of one or more pigments. Such pigments include, but are not limited to, titanium dioxide, which are commercially available under the tradename Ti-Pure™ from the DuPont, Wilmington, DE, USA.

The pressure sensitive adhesive composition may further include optionally one or more fillers. The pressure sensitive adhesive composition may comprise 0 to 80 percent by weight of one or more fillers. All individual values and subranges from 0 to 80 weight percent are included herein and disclosed herein; for example, the weight percent of fillers can be from a lower limit of 0.1, 0.2, 0.3, 0.5, 1, 2, 3, 4, 5, 10, 20, 30, or 40 weight percent to an upper limit of 15, 20, 25, 35, 45, 55, 65, 75, or 80 weight percent. For example, pressure sensitive adhesive composition may comprise 0 to 75 percent by weight of one or more fillers; or in the alternative, pressure sensitive adhesive composition may comprise 0 to 65 percent by weight of one or more fillers; or in the alternative, pressure sensitive adhesive composition may comprise 0 to 55 percent by weight of one or more fillers; or in the alternative, pressure sensitive adhesive composition may comprise 0 to 45 percent by weight of one or more fillers. Such fillers include, but are not limited to, calcium carbonate, commercially available under the tradename Drikalite™ from the Imeyrys, Victoria, Australia, barium sulfate, aluminum silicate, ceramic micro-spheres, glass micro-spheres, and fly ash.

The pressure sensitive adhesive composition may further include optionally one or more freeze-thaw agents. The pressure sensitive adhesive composition may comprise 0.1 to 2 percent by weight of one or more freeze-thaw agents. All individual values and subranges from 0.1 to 2 weight percent are included herein and disclosed herein; for example, the weight percent of freeze-thaw agents can be from a lower limit of 0.1, 0.2, 0.3, or 0.5 weight percent to an upper limit of 05, 1, 1.5, or 2 weight percent. For example, pressure sensitive adhesive composition may comprise 0.1 to 2 percent by weight of one or more freeze-thaw agents; or in the alternative, pressure sensitive adhesive composition may comprise 0.1 to 1.5 percent by weight of one or more freeze-thaw agents; or in the alternative, pressure sensitive adhesive composition may comprise 0.1 to 1 percent by weight of one or more freeze-thaw agents; or in the alternative, pressure sensitive adhesive composition may comprise 0.1 to 0.5 percent by weight of one or more freeze-thaw agents. Freeze-thaw agents, as used herein, refer to additives that typically prevent coagulation of the dispersion when exposed to extreme temperature cycles. Such freeze-thaw agents include, but are not limited to, glycols such as ethylene glycol, diethylene glycol, propylene glycol, dipropylene glycol, butylene glycol, dibutylene glycol. Such glycols are commercially available from the Dow Chemical Company, Midland, Michigan.

The pressure sensitive adhesive composition may further include optionally one or more neutralizing agents. The pressure sensitive adhesive composition may comprise 0.1 to 2 percent by weight of one or more neutralizing agents. All individual values and subranges from 0.1 to 2 weight percent are included herein and disclosed herein; for example, the weight percent of neutralizing agents can be from a lower limit of 0.1, 0.2, 0.3, or 0.5 weight percent to an upper limit of 05, 1, 1.5, or 2 weight percent. For example, pressure sensitive adhesive composition may comprise 0.1 to 2 percent by weight of one or more neutralizing agents; or in the alternative, pressure sensitive adhesive composition may comprise 0.1 to 1.5 percent by weight of one or more neutralizing agents; or in the alternative, pressure sensitive adhesive composition may comprise 0.1 to 1 percent by weight of one or more neutralizing agents; or in the alternative, pressure sensitive adhesive composition may comprise 0.1 to 0.5 percent by weight of one or more neutralizing agents. Neutralizing agents are typically used to control pH to provide stability to the formulated pressure sensitive adhesive composition. Such neutralizing agents include, but are not limited to, aqueous ammonia or aqueous amines, or other aqueous inorganic salts.

The pressure sensitive adhesive composition may further include optionally one or more plasticizers. The pressure sensitive adhesive composition may comprise less than 40 percent by weight of one or more plasticizers. All individual values and subranges from less than 40 weight percent are included herein and disclosed herein; for example, the weight percent of plasticizers can be from a lower limit of 0.1, 0.2, 0.3, 0.5, 1, 2, 3, 4, or 5 weight percent to an upper limit of 10, 20, 30, or 40 weight percent. For example, pressure sensitive adhesive composition may comprise 0.1 to 40 percent by weight of one or more plasticizers; or in the alternative, pressure sensitive adhesive composition may comprise 0.1 to 30 percent by weight of one or more plasticizers; or in the alternative, pressure sensitive adhesive composition may comprise 0.1 to 20 percent by weight of one or more plasticizers; or in the alternative, pressure sensitive adhesive composition may comprise 0.1 to 25 percent by weight of one or more plasticizers. Such plasticizers are commercially available under the tradename Jayflex™ from ExxonMobil Chemical Company, Texas, USA.

The pressure sensitive adhesive composition may further include optionally one or more tackifiers. The pressure sensitive adhesive composition may comprise less than 50 percent by weight of one or more tackifiers. All individual values and subranges from less than 50 weight percent are included herein and disclosed herein; for example, the weight percent of tackifiers can be from a lower limit of 0.1, 0.2, 0.3, 0.5, 1, 2, 3, 4, or 5 weight percent to an upper limit of 10, 20, 30, 40, or 50 weight percent. For example, pressure sensitive adhesive composition may comprise 0.1 to 50 percent by weight of one or more tackifiers; or in the alternative, pressure sensitive adhesive composition may comprise 0.1 to 40 percent by weight of one or more tackifiers; or in the alternative, pressure sensitive adhesive composition may comprise 0.1 to 30 percent by weight of one or more tackifiers; or in the alternative, pressure sensitive adhesive composition may comprise 0.1 to 20 percent by weight of one or more tackifiers.

The pressure sensitive adhesive composition may further include optionally one or more adhesion promoters. The pressure sensitive adhesive composition may comprise less than 5 percent by weight of one or more adhesion promoters. All individual values and subranges from less than 5 weight percent are included herein and disclosed herein; for example, the weight percent of adhesion promoters can be from a lower limit of 0.1, 0.2, 0.3, 0.5, 1, 2, 3, or 4 weight percent to an upper limit of 0.1, 0.2, 0.3, 0.5, 1, 2, 3, 4, 5 weight percent. For example, pressure sensitive adhesive composition may comprise 0.1 to 5 percent by weight of one or more adhesion promoters; or in the alternative, pressure sensitive adhesive composition may comprise 0.1 to 4 percent by weight of one or more adhesion promoters; or in the alternative, pressure sensitive adhesive composition may comprise 0.1 to 3 percent by weight of one or more adhesion promoters; or in the alternative, pressure sensitive adhesive composition may comprise 0.1 to 2 percent by weight of one or more adhesion promoters.

The pressure sensitive adhesive composition may further include optionally one or more film clarifying additives. The pressure sensitive adhesive composition may comprise less than 5 percent by weight of one or more film clarifying additives. All individual values and subranges from less than 5 weight percent are included herein and disclosed herein; for example, the weight percent of film clarifying additives can be from a lower limit of 0.1, 0.2, 0.3, 0.5, 1, 2, 3, or 4 weight percent to an upper limit of 0.1, 0.2, 0.3, 0.5, 1, 2, 3, 4, 5 weight percent. For example, pressure sensitive adhesive composition may comprise 0.1 to 5 percent by weight of one or more film clarifying additives; or in the alternative, pressure sensitive adhesive composition may comprise 0.1 to 4 percent by weight of one or more film clarifying additives; or in the alternative, pressure sensitive adhesive composition may comprise 0.1 to 3 percent by weight of one or more film clarifying additives; or in the alternative, pressure sensitive adhesive composition may comprise 0.1 to 2 percent by weight of one or more film clarifying additives. Exemplary film clarifying additives include, but are not limited to, those commercially available from Eastman Chemical under the tradename OptifilmTM Enhancer 400.

The pressure sensitive adhesive composition may comprise 25 to less than 100 percent by weight of ultra-high solid polyurethane dispersion. All individual values and subranges from 25 to less than 100 weight percent are included herein and disclosed herein; for example, the weight percent of ultra-high solid polyurethane dispersion can be from a lower limit of 25, 30, 35, 45, 55, or 65 weight percent to an upper limit of 35, 45, 55, 65, 70, 80, 85, 90, 95, or 99 weight percent. For example, pressure sensitive adhesive composition may comprise 35 to less than 100 percent by weight of ultra-high solid polyurethane dispersion; or in the alternative, pressure sensitive adhesive composition may comprise 45 to less than 100 percent by weight of ultra-high solid polyurethane dispersion; or in the alternative, pressure sensitive adhesive composition may comprise 55 to less than 100 percent by weight of ultra-high solid polyurethane dispersion; or in the alternative, pressure sensitive adhesive composition may comprise 65 to less than 100 percent by weight of ultra-high solid polyurethane dispersion.

The ultra-high solid polyurethane dispersion comprises (1) a first component comprising a first polyurethane prepolymer comprising the reaction product of a polyol and polyisocyanate, (2) a second component comprising a media phase selected from the group consisting of a seed latex, wherein said seed latex is selected from the group consisting of emulsions of polyvinyl acetate, polyethylene-vinyl acetate, polyacrylic or polyacrylic-styrenic; latexes of polystyrene-butadiene, polyacrylonitrile-butadiene, or polyacrylic-butadiene; aqueous dispersions of polyethylene and polyolefin ionomers; or various aqueous dispersions of polyurethane, polyester, polyamide, epoxy resin, copolymers thereof, or alloys thereof; and (3) a chain extender wherein the chain extender comprises a diamine; wherein said ultra-high solid polyurethane dispersion having a solid content of at least 60 percent by weight of solid content, excluding the weight of any filler, based on the total weight of said ultra-high solid polyurethane dispersion, and a viscosity of less than 5 Pa.s (5000 cps) at 20 rpm at 21° C using spindle #4 with Brookfield viscometer. The ultra-high solid content polyurethane dispersion may have any number of polymers; for example, the ultra-high solid content polyurethane dispersion may comprise at least two or more different polymers. The ultra-high solid content polyurethane dispersion may, for example, comprise a first polymer and a second polymer. First polymer may, for example, be a first polyurethane, and the second polymer may be a second polyurethane, polyolefin, polyacrylate, combinations thereof, or the like. The ultra-high solid content polyurethane dispersion may comprise from 5 to 95 percent by weigh of the first polymer, and from 5 to 95 percent by weight of the second polymer, based on the total weight of the ultra-high solid content polyurethane dispersion. All individual values and subranges from 5 to 95 weight percent are included herein and disclosed herein; for example, ultra-high solid content polyurethane dispersion may comprise from 5 to 45 percent by weigh of the first polymer, and from 55 to 95 percent by weight of the second polymer, based on the total weight of the ultra-high solid content polyurethane dispersion; or in the alternative, ultra-high solid content polyurethane dispersion may comprise from 20 to 60 percent by weigh of the first polymer, and from 40 to 80 percent by weight of the second polymer, based on the total weight of the ultra-high solid content polyurethane dispersion.

The ultra-high solid content polyurethane dispersion comprises at least 60 percent by weight of solid content, excluding the weight of any filler, based on the total weight of the ultra-high solid content polyurethane dispersion. All individual values and subranges of at least 60 weight percent are included herein and disclosed herein; for example, the ultra-high solid content polyurethane dispersion may comprise at least 65 percent by weight of solid content, excluding the weight of any filler, based on the total weight of the ultra-high solid content polyurethane dispersion; or in the alternative, the ultra-high solid content polyurethane dispersion may comprise at least 70 percent by weight of solid content, excluding the weight of any filler, based on the total weight of the ultra-high solid content polyurethane dispersion. The ultra-high solid content polyurethane dispersion may comprise less than 40 percent by weight of water, based on the total weight of the ultra-high solid content polyurethane dispersion. All individual values and subranges of less than 40 weight percent are included herein and disclosed herein; for example, the ultra-high solid content polyurethane dispersion may comprise less than 35 percent by weight of water, based on the total weight of the ultra-high solid content polyurethane dispersion; or in the alternative, the ultra-high solid content polyurethane dispersion may comprise less than 30 percent by weight of water, based on the total weight of the ultra-high solid content polyurethane dispersion. The ultra-high solid content polyurethane dispersion may, for example, comprise of at least two volume average particle size diameters; for example, the ultra-high solid content polyurethane dispersion may, for example, comprise of a first volume average particle size diameter, and a second volume average particle size diameter.

Volume average particle size diameter, as used herein, refers to $Dv = \left[\dfrac{\sum n_i d_i^3}{\sum n_i}\right]^{1/3}$ ; wherein $D_v$ is the volume average particle size, $n_i$ is the number of particles of diameter $d_i$; and Polydispersity index ("PDI"), as used herein refers to

$$PDI = \dfrac{\left[\dfrac{\sum n_n d_i^4}{\sum n_i d_i}\right]}{\left[\dfrac{\sum n_i d_i}{\sum n_i}\right]} .$$

Additionally, the ultra-high solid content polyurethane dispersion may comprise particles having one or more volume average particle size diameters. The first volume average particle size diameter may be in the range of 0.05 to 5.0 $\mu$m (micron). All individual values and subranges from 0.05 to 5.0 $\mu$m (micron) are included herein and disclosed herein; for example, the first volume average particle size diameter may be in the range of 0.07 to 1.0 $\mu$m (micron); or in the alternative, the first volume average particle size diameter may be in the range of 0.08 to 0.2 $\mu$m (micron). The second volume average particle size diameter may be in the range of 0.05 to 5.0 $\mu$m (micron). All individual values and subranges from 0.05 to 5.0 $\mu$m (micron) are included herein and disclosed herein; for example, the second volume average particle size diameter may be in the range of 0.07 to 1.0 $\mu$m (micron); or in the alternative, the second volume average particle size diameter may be in the range of 0.08 to 0.2 $\mu$m (micron). The ultra-high solid content polyurethane dispersion may have a bimodal or multimodal particle size distribution. The ultra-high solid content polyurethane dispersion may have any particle size distributions; for example, the ultra-high solid content polyurethane dispersion may have a particle size distribution in the range of 1: 2 to 1:20 based on the percent volume of first volume average particle size diameter to the second volume average particle size diameter. All individual values and subranges from 1: 2 to 1:20 are included herein and disclosed herein; for example, the ultra-high solid content polyurethane dispersion may have a particle size distribution in the range of 1: 2 to 1:10 based on the percent volume of the first volume average particle size diameter to second volume average particle size; or in the alternative, the ultra-high solid content polyurethane dispersion may have a particle size distribution in the range of 1:3 to 1:5 based on the percent volume of the first volume average particle size diameter to the second volume average particle size diameter. The particle volume average particle size diameter and particle size distribution are important factors to the instant invention because these factors facilitate the production of the inventive ultra-high solid content polyurethane dispersions while maintaining lower viscosities. The ultra-high solid content polyurethane dispersion may have a polydispersity index ($M_W/M_Z$) in the range of less than 5. All individual values and subranges in the range of less than 5 are included herein and disclosed herein; for example, the ultra-high solid content polyurethane dispersion may have a polydispersity index ($M_W/M_Z$) in the range of less than 3; or in the alternative, the ultra-high solid content polyurethane dispersion may have a polydispersity index ($M_W/M_Z$) in the range of less than 2. The ultra-high solid content polyurethane dispersion may have a viscosity in the range of less than 5 Pa.s (5000 cps) at 20 rpm at 21° C using spindle #4 with Brookfield viscometer. All individual values and subranges in the range of less than 5 Pa.s (5000 cps) at 20 rpm at 21° C using spindle #4 with Brookfield viscometer are included herein and disclosed herein; for example, the ultra-high solid content polyurethane dispersion may have a viscosity in the range of less than 4 Pa.s (4000 cps) at 20 rpm at 21° C using spindle #4 with Brookfield viscometer; or in the alternative,

the ultra-high solid content polyurethane dispersion may have a viscosity in the range of less than 3.5 Pa.s (3500 cps) at 20 rpm at 21° C using spindle #4 with Brookfield viscometer.

The first component may be a first polyurethane prepolymer comprising the reaction product of a polyol and polyisocyanate.

The term "first polyurethane prepolymer," as used herein refers to a stream containing a first polyurethane prepolymer. The first polyurethane prepolymer contains substantially no organic solvent and also has at least two isocyanate groups per one molecule. Such a first urethane prepolymer, as used herein, further refers to a polyurethane prepolymer wherein the content of the organic solvent in the polyurethane prepolymer is 10% by weight or less based on the total weight of the first polyurethane prepolymer. To eliminate the step of removing the organic solvent, the content of the organic solvent may, for example, be 5% by weight or less based on the total weight of the first polyurethane prepolymer; or in the alternative, the content of the organic solvent may be 1% by weight or less based on the total weight of the first polyurethane prepolymer; or in another alternative, the content of the organic solvent may be 0.1% by weight or less based on the total weight of the first polyurethane prepolymer.

The number average molecular weight of the first polyurethane prepolymer used in the present invention may, for example, be within the range from 1,000 to 200,000. All individual values and subranges from 1,000 to 200,000 are included herein and disclosed herein; for example, the first polyurethane prepolymer may have a number average molecular weight in the range of 2,000 to about 20,000. The polyurethane prepolymer may further include small amounts of monomeric isocyanates.

The first polyurethane prepolymer used in the present invention may be produced by any conventionally known processes, for example, solution process, hot melt process, or prepolymer mixing process in the presence of one or more inorganic catalysts, one or more organic catalysts, and/or combinations thereof. Furthermore, the first polyurethane prepolymer may, for example,

be produced via a process for reacting a polyisocyanate compound with an active hydrogen-containing compound and examples thereof include 1) a process for reacting a polyisocyanate compound with a polyol compound without using an organic solvent, and 2) a process for reacting a polyisocyanate compound with a polyol compound in an organic solvent, followed by removal of the solvent.

For example, the polyisocyanate compound may be reacted with the active hydrogen-containing compound at a temperature in the range of 20 °C to 120 °C; or in the alternative, in the range of 30 °C to 100 °C, at an equivalent ratio of an isocyanate group to an active hydrogen group of, for example, from 1.1:1 to 3:1; or in the alternative, from 1.2:1 to 2:1. In the alternative, the prepolymer may be prepared with an excess amount of polyols thereby facilitating the production of hydroxyl terminal polymers.

For example, an excess isocyanate group may optionally be reacted with aminosilane, thereby converting the terminal group into a reactive group other than isocyanate group, such as an alkoxysilyl group.

The first polyurethane prepolymer may further include a polymerizable acrylic, styrenic, or vinyl monomers as a diluent, which can then be polymerized by free radical polymerization via an initiator.

Examples of the polyisocyanate compound include 2,4-tolylene diisocyanate, 2,6-tolylene diisocyanate, m-phenylene diisocyanate, p-phenylene diisocyanate, 4,4'-diphenylmethane diisocyanate, 2,4'-diphenylmethane diisocyanate, 2,2'-diphenylmethane diisocyanate, 3,3'-dimethyl-4,4'-biphenylene diisocyanate, 3,3'-dimethoxy-4,4'-biphenylene diisocyanate, 3,3'-dichloro-4,4'-biphenylene diisocyanate, 1,5-naphthalene diisocyanate, 1,5-tetrahydronaphthalene diisocyanate, tetramethylene diisocyanate, 1,6-hexamethylene diisocyanate, dodecamethylene diisocyanate, trimethylhexamethylene diisocyanate, 1,3 and 1,4-bis(isocyanatemethyl)isocynate, xylylene diisocyanate, tetramethylxylylene diisocyanate, hydrogenated xylylene diisocyanate, lysine diisocyanate, isophorone diisocyanate, 4,4'-dicyclohexylmethane diisocyanate, 3,3'-dimethyl-4,4'-dicyclohexylmethane diisocyanate, isomers thereof, and/or combinations thereof.

The active hydrogen-containing compound used to produce the first polyurethane prepolymer used in the present invention includes, but is not limited to, for example, a compound having comparatively high molecular weight (hereinafter referred to as a first high-molecular weight compound) and a compound having comparatively low molecular weight (hereinafter referred to as a first low-molecular weight compound).

The number average molecular weight of the first high-molecular weight compound may, for example, be within a range from 300 to 20,000; or in the alternative, within a range from 500 to 5,000. The number average molecular weight of the first low-molecular weight compound may, for example, be less than 300. These active hydrogen-containing compounds may be used alone, or two or more kinds of them may be used in combination.

Among these active hydrogen-containing compounds, examples of the first high-molecular weight compound include, but are not limited to aliphatic and aromatic polyester polyols including caprolactone based polyester polyols, seed oil based polyester polyols, any polyester/polyether hybrid polyols, PTMEG-based polyether polyols; polyether polyols based on ethylene oxide, propylene oxide, butylene oxide and mixtures thereof; polycarbonate polyols; polyacetal polyols, polyacrylate polyols; polyesteramide polyols; polythioether polyols; polyolefin polyols such as saturated or unsaturated polybutadiene polyols.

The natural oil based polyols are polyols based on or derived from renewable feedstock resources such as natural and/or genetically modified (GMO) plant vegetable seed oils and/or animal source fats. Such oils and/or fats are generally comprised of triglycerides, that is, fatty acids linked together with glycerol. Preferred are vegetable oils that have at least about 70 percent unsaturated fatty acids in the triglyceride. Preferably the natural product contains at least about 85 percent by weight unsaturated fatty acids. Examples of preferred vegetable oils include, for example, those from castor, soybean, olive, peanut, rapeseed, corn, sesame, cotton, canola, safflower, linseed, palm, grapeseed, black caraway, pumpkin kernel, borage seed, wood germ, apricot kernel, pistachio, almond, macadamia nut, avocado, sea buckthorn, hemp, hazelnut, evening primrose, wild rose, thistle, walnut, sunflower, jatropha seed oils, or a combination thereof. Additionally, oils obtained from organisms such as algae may also be used. Examples of animal products include lard, beef tallow, fish oils and mixtures thereof. A combination of vegetable and animal based oils/fats may also be used.

Several chemistries can be used to prepare the natural oil based polyols. Such modifications of a renewable resource include, for example, epoxidation, hydroxylation, ozonolysis, esterification, hydroformylation, or alkoxylation. Such modifications are commonly known in the art and are described, for example, in U.S. Patent Nos. 4,534,907, 4,640,801, 6,107,433, 6,121,398, 6,897,283, 6,891,053, 6,962,636, 6,979,477, and PCT publication Nos. WO 2004/020497, WO 2004/096744, and WO 2004/096882.

After the production of such polyols by modification of the natural oils, the modified products may be further alkoxylated. The use of ethylene oxide (EO) or mixtures of EO with other oxides, introduce hydrophilic moieties into the polyol. In one embodiment, the modified product undergoes alkoxylation with sufficient EO to produce a natural oil based polyol with between about 10 weight % and about 60 weight % percent EO; preferably between about 20 weight % and about 40 weight % EO.

In another embodiment, the natural oil based polyols are obtained by a multi-step process wherein the animal or vegetable oils/fats is subjected to transesterification and the constituent fatty acids recovered. This step is followed by hydroformylating carbon-carbon double bonds in the constituent fatty acids to form hydroxymethyl groups, and then forming a polyester or polyether/polyester by reaction of the hydroxymethylated fatty acid with an appropriate initiator compound. Such a multi-step process is commonly known in the art, and is described, for example, in PCT publication Nos. WO 2004/096882 and 2004/096883. The multi-step process results in the production of a polyol with both hydrophobic and hydrophilic moieties, which results in enhanced miscibility with both water and conventional petroleum-based polyols.

The initiator for use in the multi-step process for the production of the natural oil based polyols may be any initiator used in the production of conventional petroleum-based polyols. Preferably the initiator is selected from the group consisting of neopentylglycol; 1,2-propylene glycol; trimethylolpropane; pentaerythritol; sorbitol; sucrose; glycerol; diethanolamine; alkanediols such as 1,6-hexanediol, 1,4-butanediol; 1,4-cyclohexane diol; 2,5-hexanediol; ethylene glycol; diethylene glycol, triethylene glycol; bis-3-aminopropyl methylamine; ethylene diamine; diethylene triamine; 9(1)-hydroxymethyloctadecanol, 1,4-cyclohexanedimethanol; 1,3-cyclohexanedimethanol; mixture of 1,3- and 1,4-cyclohexanedimethanol (UNOXOL™-diol); 8,8-bis(hydroxymethyl)tricyclo[5,2,1,0$^{2,6}$]decene; Dimerol alcohol (36 carbon diol available from Henkel Corporation); hydrogenated bisphenol; 9,9(10,10)-bishydroxymethyloctadecanol; 1,2,6-hexanetriol and combination thereof. More preferably the initiator is selected from the group consisting of glycerol; ethylene glycol; 1,2-propylene glycol; trimethylolpropane; ethylene diamine; pentaerythritol; diethylene triamine; sorbitol; sucrose; or any of the aforementioned where at least one of the alcohol or amine groups present therein has been reacted with ethylene oxide, propylene oxide or mixture thereof; and combination thereof. More preferably, the initiator is glycerol, trimethylopropane, pentaerythritol, sucrose, sorbitol, and/or mixture thereof.

In one embodiment, the initiators are alkoxlyated with ethylene oxide or a mixture of ethylene oxide and at least one other alkylene oxide to give an alkoxylated initiator with a molecular weight between about 200 and about 6000, preferably between about 500 and about 3000.

The functionality of the at least one natural oil based polyol, is above about 1.5 and generally not higher than about 6. In one embodiment, the functionality of the at least one natural oil based polyol is in the range of 1.5 to 3. In one embodiment, the functionality of the at least one natural oil based polyol is in the range of 1.5 to 2.5. In one embodiment, the functionality of the at least one natural oil based polyol is about 2. In one embodiment, the functionality is below about 4. The hydroxyl number of the at least one natural oil based polyol is below about 300 mg KOH/g, preferably between about 50 and about 300, more preferably between about 60 and about 200. In one embodiment, the hydroxyl number is below about 100.

The level of renewable feedstock in the natural oil based polyol can vary between about 10 and about 100 %, usually between about 10 and about 90 %.

The natural oil based polyols may constitute up to about 90 weight % of the polyol blend. However, in one embodiment, the natural oil based polyol may constitute at least 5 weight %, at least 10 weight %, at least 25 weight %, at least 35 weight %, at least 40 weight %, at least 50 weight %, or at least 55 weight % of the total weight of the polyol blend. The natural oil based polyols may constitute 40 % or more, 50 weight % or more, 60 weight % or more, 75 weight % or more, 85 weight % or more, 90 weight % or more, or 95 weight % or more of the total weight of the combined polyols.

Combination of two types or more of natural oil based polyols may also be used, either to maximize the level of seed oil in the foam formulation, or to optimize foam processing and/or specific foam characteristics, such as resistance to humid aging.

The viscosity measured at 25°C of the natural oil based polyols is generally less than about 6,000 mPa.s. Preferably, the viscosity is less than about 5,000 mPa.s.

As the polyester polyol, polyester polyol, for example, obtained by the polycondensation reaction of a glycol and an acid may be used.

Examples of the glycol, which can be used to obtain the polyester polyol, include, but are not limited to, ethylene glycol, propylene glycol, 1,3-propanediol, 1,4-butanediol, 1,5-pentanediol, 3-methyl-1,5-pentanediol, 1,6-hexanediol, neopentyl glycol, diethylene glycol, triethylene glycol, tetraethylene glycol, polyethylene glycol, dipropylene glycol, tripropylene glycol, bishydroxyethoxybenzene, 1,4-cyclohexanediol, 1,4-cyclohexanedimethanol, 1,3-cyclohexanedimethanol, mixture of 1,3- and 1,4-cyclohexanedimethanol (UNOXOL™-diol), bisphenol A, hydrogenated bisphenol A, hydroquinone, and alkylene oxide adducts thereof.

Examples of the acid, which can be used to obtain the polyester polyol, include, but are not limited to, succinic acid, adipic acid, azelaic acid, sebacic acid, dodecanedicarboxylic acid, maleic anhydride, fumaric acid, 1,3-cyclopentanedicarboxylic acid, 1,4-cyclohexanedicarboxylic acid, terephthalic acid, isophthalic acid, phthalic acid, 1,4-naphthalenedicarboxylic acid, 2, 5-naphthalenedicarboxylic acid, 2,6-naphthalenedicarboxylic acid, naphthalic acid, biphenyldicarboxylic acid, 1,2-bis(phenoxy)ethane-p,p'-dicarboxylic acid, and anhydrides or ester-forming derivatives of these dicarboxylic acids; and p-hydroxybenzoic acid, p-(2-hydroxyethoxy)benzoic acid, and ester-forming derivatives of these hydroxycarboxylic acids.

Also a polyester obtained by the ring-opening polymerization reaction of a cyclic ester compound such as ε-caprolactone, and copolyesters thereof may be used.

The polyester polyols may also be produced by transesterification of the above-mentioned diols and triols with hydroxy group containing fatty acid methyl esters.

Examples of the polyether polyol include, but are not limited to, compounds obtained by the polyaddition reaction of one or more kinds of compounds having at least two active hydrogen atoms such as ethylene glycol, diethylene glycol, triethylene glycol, propylene glycol, trimethylene glycol, 1,3-butanediol, 1,4-butanediol, 1,6-hexanediol, neopentyl glycol, glycerin, trimethylolethane, trimethylolpropane, sorbitol, sucrose, ethylenediamine, diethylenetriamine, triisopropanolamine, pyrogallol, dihydroxybenzoic acid, hydroxyphthalic acid, and 1,2,3-propanetrithiol with one or more kinds among ethylene oxide, propylene oxide, butylene oxide, styrene oxide, epichlorohydrin, and tetrahydrofuran.

Examples of the polycarbonate polyol include, but are not limited to, compounds obtained by the reaction of glycols such as 1,4-butanediol, 1,6-hexanediol, and diethylene glycol, with diphenyl carbonate and phosgene.

Among the active hydrogen-containing compounds, the first low-molecular weight compound is a compound which has at least two active hydrogens per one molecule and has a number average molecular weight of less than 300, and examples thereof include, but are not limited to, glycol components used as raw materials of the polyester polyol; polyhydroxy compounds such as glycerin, trimethylolethane, trimethylolpropane, sorbitol, and pentaerythritol;

and amine compounds such as ethylenediamine, 1, 6-hexamethylenediamine, piperazine, 2,5-dimethylpiperazine, isophoronediamine, 4,4'-dicyclohexylmethanediamine, 3,3'-dimethyl-4,4'-dicyclohexylmethanediamine, 1,4-cyclohexanediamine, 1,2-propanediamine, hydazine, diethylenetriamine, and triethylenetetramine.

The first urethane prepolymer may further include a hydrophilic group. The term "hydrophilic group," as used herein, refers to an anionic group (for example, carboxyl group, sulfonic acid group, or phosphoric acid group), or a cationic group (for example, tertiary amino group, or quaternary amino group), or a nonionic hydrophilic group (for example, a group composed of a repeating unit of ethylene oxide, or a group composed of a repeating unit of ethylene oxide and a repeating unit of another alkylene oxide).

Among hydrophilic groups, a nonionic hydrophilic group having a repeating unit of ethylene oxide may, for example, be preferred because the finally obtained polyurethane emulsion has excellent compatibility with other kinds of emulsions. Introduction of a carboxyl group and/or a sulfonic acid group is effective to make the particle size finer.

The ionic group refers to a functional group capable of serving as a hydrophilic ionic group which contributes to self dispersibility in water by neutralization, providing colloidal stability during the processing against agglomeration; stability during shipping, storage and formulation with other additives. These hydrophilic groups could also introduce application specific properties such as adhesion.

When the ionic group is an anionic group, the neutralizer used for neutralization includes, for example, nonvolatile bases such as sodium hydroxide and potassium hydroxide; and volatile bases such as tertiary amines (for example trimethylamine, triethylamine, dimethylethanolamine, methyldiethanolamine, and triethanolamine) and ammonia can be used.

When the ionic group is a cationic group, usable neutralizer includes, for example, inorganic acids such as hydrochloric acid, sulfuric acid, and nitric acid; and organic acids such as formic acid and acetic acid.

Neutralization may be conducted before, during or after the polymerization of the compound having an ionic group. Alternatively, neutralization may be conducted during or after the polyurethane polymerization reaction.

To introduce a hydrophilic group in the first polyurethane prepolymer, a compound, which has at least one active hydrogen atom per one molecule and also has the above hydrophilic group, may be used as an active hydrogen-containing compound. Examples of the compound, which has at least one active hydrogen atom per one molecule and also has the above hydrophilic group, include:

(1) sulfonic acid group-containing compounds such as 2-oxyethanesulfonic acid, phenolsulfonic acid, sulfobenzoic acid, sulfosuccinic acid, 5-sulfoisophthalic acid, sulfanilic acid, 1,3-phenylenediamine-4,6-disulfonic acid, and 2,4-diaminotoluene-5-sulfonic acid, and derivatives thereof, or polyester polyols obtained by copolymerizing them;

(2) carboxylic acid-containing compounds such as 2,2-dimethylolpropionic acid, 2,2-dimethylolbutyric acid, 2,2-dimethylolvaleric acid, dioxymaleic acid, 2,6-dioxybenzoic acid, and 3,4-diaminobenzoic acid, and derivatives thereof, or polyester polyols obtained by copolymerizing them; tertiary amino group-containing compounds such as methyldiethanolamine, butyldiethanolamine, and alkyldiisopropanolamine, and derivatives thereof, or polyester polyol or polyether polyol obtained by copolymerizing them;

(3) reaction products of the above tertiary amino group-containing compounds, or derivatives thereof, or polyester polyols or polyether polyols obtained by copolymerizing them, with quaternizing agents such as methyl chloride, methyl bromide, dimethylsulfuric acid, diethylsulfuric acid, benzyl chloride, benzyl bromide, ethylenechlorohydrin, ethylenebromohydrin, epichlorohydrin, and bromobutane;

(4) nonionic group-containing compounds such as polyoxyethylene glycol or polyoxyethylene-polyoxypropylene copolymer glycol, which has at least 30% by weight of a repeating unit of ethylene oxide and at least one active hydrogen in the polymer and also has a molecular weight of 300 to 20,000, polyoxyethylene-polyoxybutylene copolymer glycol, polyoxyethylene-polyoxyalkylene copolymer glycol, and monoalkyl ether thereof, or polyester-polyether polyols obtained by copolymerizing them; and

(5) combinations thereof.

The second component comprises a media phase selected from the group consisting of of a seed latex, wherein said seed latex is selected from the group consisting of emulsions of polyvinyl acetate, polyethylene-vinyl acetate, polyacrylic or polyacrylic-styrenic; latexes of polystyrene-butadiene, polyacrylonitrile-butadiene, or polyacrylic-butadiene; aqueous dispersions of polyethylene and polyolefin ionomers; or various aqueous dispersions of polyurethane, polyester, polyamide, epoxy resin, copolymers thereof, or alloys thereof

The term "second polyurethane prepolymer emulsion," as used herein refers to a stream containing a second polyurethane prepolymer. A second polyurethane prepolymer contains substantially no organic solvent and also has at least two isocyanate groups per one molecule. Such a second polyurethane prepolymer, as used herein, further refers to a polyurethane prepolymer wherein the content of the organic solvent in the polyurethane prepolymer is 10% by weight or less based on the total weight of a second polyurethane prepolymer. To eliminate the step of removing the organic solvent, the content of the organic solvent may, for example, be 5% by weight or less based on the total weight of a second polyurethane prepolymer; or in the
alternative, the content of the organic solvent may be 1% by weight or less based on the total weight of a second polyurethane prepolymer; or in another alternative, the content of the organic solvent may be 0.1% by weight or less based on the total weight of a second polyurethane prepolymer.

The number average molecular weight of a second polyurethane prepolymer can, for example, be within the range from 1,000 to 200,000. All individual values and subranges from 1,000 to 200,000 are included herein and disclosed herein; for example, a second polyurethane prepolymer may have a number average molecular weight in the range of 2,000 to about 20,000. A polyurethane prepolymer may further include small amounts of monomeric isocyanates.

A second polyurethane prepolymer can be produced by any conventionally known processes, for example, solution process, hot melt process, or prepolymer mixing process. Furthermore, a second urethane prepolymer may, for example, be produced via a process for reacting a polyisocyanate compound with an active hydrogen-containing compound and examples thereof include 1) a process for reacting a polyisocyanate compound with a polyol compound without using an organic solvent, and 2) a process for reacting a polyisocyanate compound with a polyol compound in an organic solvent, followed by removal of the solvent. The final prepolymer may be NCO or OH terminated.

For example, a polyisocyanate compound may be reacted with the active hydrogen-containing compound at a temperature in the range of 20 °C to 120 °C; or in the alternative, in the range of 30 °C to 100 °C, at an equivalent ratio of an isocyanate group to an active hydrogen group of, for example, from 1.1:1 to 3:1, or in the alternative, from 1.2:1 to 2:1. In the alternative, a prepolymer may be prepared with an excess amount of polyols thereby facilitating the production of hydroxyl terminal polymers.

For example, an excess isocyanate group may optionally be reacted with aminosilane, thereby converting the terminal group into a reactive group other than isocyanate group, such as an alkoxysilyl group.

A second polyurethane prepolymer may further include a polymerizable acrylic, styrenic, or vinyl monomers as a diluent, which can then be polymerized by free radical polymerization via an initiator.

Examples of the polyisocyanate compound include 2,4-tolylene diisocyanate, 2,6-tolylene diisocyanate, m-phenylene diisocyanate, p-phenylene diisocyanate, 4,4'-diphenylmethane diisocyanate, 2,4'-diphenylmethane diisocyanate, 2,2'-diphenylmethane diisocyanate, 3,3'-dimethyl-4,4'-biphenylene diisocyanate, 3,3'-dimethoxy-4,4'-biphenylene diisocyanate, 3,3'-dichloro-4,4'-biphenylene diisocyanate, 1,5-naphthalene diisocyanate, 1,5-tetrahydronaphthalene diisocyanate, tetramethylene diisocyanate, 1,6-hexamethylene diisocyanate, dodecamethylene diisocyanate, trimethylhexamethylene diisocyanate, 1,3 and 1,4-bis(isocyanatemethyl)isocynate, xylylene diisocyanate, tetramethylxylylene diisocyanate, hydrogenated xylylene diisocyanate, lysine diisocyanate, isophorone diisocyanate, 4,4'-dicyclohexylmethane diisocyanate, 3,3'-dimethyl-4,4'-dicyclohexylmethane diisocyanate, isomers thereof, and/or combinations thereof. Aromatic or aliphatic isocyanate may be used; however, aliphatic isocyanates may be preferred.

The active hydrogen-containing compound used to produce a second polyurethane prepolymer includes, but is not limited to, for example, a compound having comparatively high molecular weight (hereinafter referred to as a second high-molecular weight compound) and a compound having comparatively low molecular weight (hereinafter referred to as a second low-molecular weight compound).

The number average molecular weight of a second high-molecular weight compound may, for example, be within a range from 300 to 20,000; or in the alternative, within a range from 500 to 5,000. The number average molecular weight of a second low-molecular weight compound may, for example, be less than 300. These active hydrogen-containing compounds may be used alone, or two or more kinds of them may be used in combination.

Among these active hydrogen-containing compounds, examples of the second high-molecular weight compound include, but are not limited to aliphatic and aromatic polyester polyols including caprolactone based polyester polyols, seed oil based polyester polyols, any polyester/polyether hybrid polyols, PTMEG-based polyether polyols; polyether polyols based on ethylene oxide, propylene oxide, butylene oxide and mixtures thereof; polycarbonate polyols; polyacetal polyols; polyacrylate polyols; polyesteramide polyols; polythioether polyols; and polyolefin polyols such as saturated or unsaturated polybutadiene polyols.

The natural oil based polyols are polyols based on or derived from renewable feedstock resources such as natural and/or genetically modified (GMO) plant vegetable seed oils and/or animal source fats. Such oils and/or fats are generally comprised of triglycerides, that is, fatty acids linked together with glycerol. Preferred are vegetable oils that have at least about 70 percent unsaturated fatty acids in the triglyceride. Preferably the natural product contains at least about 85 percent by weight unsaturated fatty acids. Examples of preferred vegetable oils include, for example, those from castor, soybean, olive, peanut, rapeseed, corn, sesame, cotton, canola, safflower, linseed, palm, grapeseed, black caraway, pumpkin kernel, borage seed, wood germ, apricot kernel, pistachio, almond, macadamia nut, avocado, sea buckthorn, hemp, hazelnut, evening primrose, wild rose, thistle, walnut, sunflower, jatropha seed oils, or a combination thereof. Additionally, oils obtained from organisms such as algae may also be used. Examples of animal products include lard, beef tallow, fish oils and mixtures thereof. A combination of vegetable and animal based oils/fats may also be used.

Several chemistries can be used to prepare the natural oil based polyols. Such modifications of a renewable resource include, for example, epoxidation, hydroxylation, ozonolysis, esterification, hydroformylation, or alkoxylation.

Such modifications are commonly known in the art and are described, for example, in U.S. Patent Nos. 4,534,907, 4,640,801, 6,107,433, 6,121,398, 6,897,283, 6,891,053, 6,962,636, 6,979,477, and PCT publication Nos. WO 2004/020497, WO 2004/096744, and WO 2004/096882.

After the production of such polyols by modification of the natural oils, the modified products may be further alkoxylated. The use of ethylene oxide (EO) or mixtures of EO with other oxides, introduce hydrophilic moieties into the polyol. In one embodiment, the modified product undergoes alkoxylation with sufficient EO to produce a natural oil based polyol with between about 10 weight % and about 60 weight % percent EO; preferably between about 20 weight % and about 40 weight % EO.

In another embodiment, the natural oil based polyols are obtained by a multi-step process wherein the animal or vegetable oils/fats is subjected to transesterification and the constituent fatty acids recovered. This step is followed by hydroformylating carbon-carbon double bonds in the constituent fatty acids to form hydroxymethyl groups, and then forming a polyester or polyether/polyester by reaction of the hydroxymethylated fatty acid with an appropriate initiator compound. Such a multi-step process is commonly known in the art, and is described, for example, in PCT publication Nos. WO 2004/096882 and 2004/096883. The multi-step process results in the production of a polyol with both hydrophobic and hydrophilic moieties, which results in enhanced miscibility with both water and conventional petroleum-based polyols.

The initiator for use in the multi-step process for the production of the natural oil based polyols may be any initiator used in the production of conventional petroleum-based polyols. Preferably the initiator is selected from the group consisting of neopentylglycol; 1,2-propylene glycol; trimethylolpropane; pentaerythritol; sorbitol; sucrose; glycerol; diethanolamine; alkanediols such as 1,6-hexanediol, 1,4-butanediol; 1,4-cyclohexane diol; 2,5-hexanediol; ethylene glycol; diethylene glycol, triethylene glycol; bis-3-aminopropyl methylamine; ethylene diamine; diethylene triamine; 9(1)-hydroxymethyloctadecanol, 1,4-bishydroxymethylcyclohexane; 8,8-bis(hydroxymethyl)tricyclo[5,2,1,0$^{2,6}$]decene; Dimerol alcohol (36 carbon diol available from Henkel Corporation); hydrogenated bisphenol; 9,9(10,10)-bishydroxymethyloctadecanol; 1,2,6-hexanetriol and combination thereof. More preferably the initiator is selected from the group consisting of glycerol; ethylene glycol; 1,2-propylene glycol; trimethylolpropane; ethylene diamine; pentaerythritol; diethylene triamine; sorbitol; sucrose; or any of the aforementioned where at least one of the alcohol or amine groups present therein has been reacted with ethylene oxide, propylene oxide or mixture thereof; and combination thereof. More preferably, the initiator is glycerol, trimethylopropane, pentaerythritol, sucrose, sorbitol, and/or mixture thereof.

In one embodiment, the initiators are alkoxlyated with ethylene oxide or a mixture of ethylene oxide and at least one other alkylene oxide to give an alkoxylated initiator with a molecular weight between about 200 and about 6000, preferably between about 500 and about 3000.

The functionality of the at least one natural oil based polyol, is above about 1.5 and generally not higher than about 6. In one embodiment, the functionality of the at least one natural oil based polyol is in the range of 1.5 to 3. In one embodiment, the functionality of the at least one natural oil based polyol is in the range of 1.5 to 2.5. In one embodiment, the functionality of the at least one natural oil based polyol is about 2. In one embodiment, the functionality is below about 4. The hydroxyl number of the at least one natural oil based polyol is below about 300 mg KOH/g, preferably between about 50 and about 300, more preferably between about 60 and about 200. In one embodiment, the hydroxyl number is below about 100.

The level of renewable feedstock in the natural oil based polyol can vary between about 10 and about 100 %, usually between about 10 and about 90 %.

The natural oil based polyols may constitute up to about 90 weight % of the polyol blend. However, in one embodiment, the natural oil based polyol may constitute at least 5 weight %, at least 10 weight %, at least 25 weight %, at least 35 weight %, at least 40 weight %, at least 50 weight %, or at least 55 weight % of the total weight of the polyol blend. The natural oil based polyols may constitute 40 % or more, 50 weight % or more, 60 weight % or more, 75 weight % or more, 85 weight % or more, 90 weight % or more, or 95 weight % or more of the total weight of the combined polyols.

Combination of two types or more of natural oil based polyols may also be used, either to maximize the level of seed oil in the foam formulation, or to optimize foam processing and/or specific foam characteristics, such as resistance to humid aging.

The viscosity measured at 25°C of the natural oil based polyols is generally less than about 6,000 mPa.s. Preferably, the viscosity is less than about 5,000 mPa.s.

As the polyester polyol, polyester polyols, for example, obtained by the polycondensation reaction of a glycol and an acid may be used.

Examples of the glycol, which can be used to obtain the polyester polyol, include, but are not limited to, ethylene glycol, propylene glycol, 1,3-propanediol, 1,4-butanediol, 1,5-pentanediol, 3-methyl-1,5-pentanediol, 1,6-hexanediol, neopentyl glycol, diethylene glycol, triethylene glycol, tetraethylene glycol, polyethylene glycol, dipropylene glycol, tripropylene glycol, bishydroxyethoxybenzene, 1,4-cyclohexanediol, 1,4-cyclohexanedimethanol, bisphenol A, mixture of 1,3- and 1,4-cyclohexanedimethanol (UNOXOL™-diol), hydrogenated bisphenol A, hydroquinone, and alkylene oxide adducts thereof.

Examples of the acid, which can be used to obtain the polyester polyol, include, but are not limited to, succinic acid, adipic acid, azelaic acid, sebacic acid, dodecanedicarboxylic acid, maleic anhydride, fumaric acid, 1,3-cyclopentanedicarboxylic acid, 1,4-cyclohexanedicarboxylic acid, terephthalic acid, isophthalic acid, phthalic acid, 1,4-naphthalenedicarboxylic acid, 2, 5-naphthalenedicarboxylic acid, 2,6-naphthalenedicarboxylic acid, naphthalic acid, biphenyldicarboxylic acid, 1,2-bis(phenoxy)ethane-p,p'-dicarboxylic acid, and anhydrides or ester-forming derivatives of these dicarboxylic acids; and p-hydroxybenzoic acid, p-(2-hydroxyethoxy)benzoic acid, and ester-forming derivatives of these hydroxycarboxylic acids.

Also a polyester obtained by the ring-opening polymerization reaction of a cyclic ester compound such as $\varepsilon$-caprolactone, and copolyesters thereof can be used.

The polyester polyols can also be produced by transesterification of the above mentioned diols and triols with hydroxy group containing fatty acid methyl esters.

Examples of the polyether polyol include, but are not limited to, compounds obtained by the polyaddition reaction of one or more kinds of compounds having at least two active hydrogen atoms such as ethylene glycol, diethylene glycol, triethylene glycol, propylene glycol, trimethylene glycol, 1,3-butanediol, 1,4-butanediol, 1,6-hexanediol, neopentyl glycol, glycerin, trimethylolethane, trimethylolpropane, sorbitol, sucrose, ethylenediamine, diethylenetriamine, triisopropanolamine, pyrogallol, dihydroxybenzoic acid, hydroxyphthalic acid, and 1,2,3-propanetrithiol with one or more kinds among ethylene oxide, propylene oxide, butylene oxide, styrene oxide, epichlorohydrin, and tetrahydrofuran.

Examples of the polycarbonate polyol include, but are not limited to, compounds obtained by the reaction of glycols such as 1,4-butanediol, 1,6-hexanediol, and diethylene glycol, with diphenyl carbonate and phosgene.

Among the active hydrogen-containing compounds, the second low-molecular weight compound is a compound which has at least two active hydrogens per one molecule and has a number average molecular weight of less than 300, and examples thereof include, but are not limited to, glycol components used as raw materials of the polyester polyol; polyhydroxy compounds such as glycerin, trimethylolethane, trimethylolpropane, sorbitol, and pentaerythritol; and amine compounds such as ethylenediamine, 1,6-hexamethylenediamine, piperazine, 2,5-dimethylpiperazine, isophoronediamine, 4,4'-dicyclohexylmethanediamine, 3,3'-dimethyl-4,4'- dicyclohexylmethanediamine, 1,4-cyclohexanediamine, 1,2-propanediamine, hydazine, diethylenetriamine, and triethylenetetramine.

A second urethane prepolymer may further include a hydrophilic group. The term "hydrophilic group," as used herein, refers to an anionic group (for example, carboxyl group, sulfonic acid group, or phosphoric acid group), or a cationic group (for example, tertiary amino group, or quaternary amino group), or a nonionic hydrophilic group (for example, a group composed of a repeating unit of ethylene oxide, or a group composed of a repeating unit of ethylene oxide and a repeating unit of another alkylene oxide).

Among hydrophilic groups, a nonionic hydrophilic group having a repeating unit of ethylene oxide may, for example, be preferred because the finally obtained polyurethane emulsion has excellent compatibility with other kinds of emulsions. Introduction of a carboxyl group and/or a sulfonic acid group is effective to make the particle size finer.

The ionic group refers to a functional group capable of serving as a hydrophilic ionic group which contributes to self dispersibility in water by neutralization, providing colloidal stability during the processing against agglomeration; stability during shipping, storage and formulation with other additives. These hydrophilic groups could also introduce application specific properties such as adhesion.

When the ionic group is an anionic group, the neutralizer used for neutralization includes, for example, nonvolatile bases such as sodium hydroxide and potassium hydroxide; and volatile bases such as tertiary amines (for example trimethylamine, triethylamine, dimethylethanolamine, methyldiethanolamine, and triethanolamine) and ammonia can be used.

When the ionic group is a cationic group, usable neutralizer includes, for example, inorganic acids such as hydrochloric acid, sulfuric acid, and nitric acid; and organic acids such as formic acid and acetic acid.

Neutralization may be conducted before, during or after the polymerization of the compound having an ionic group. Alternatively, neutralization may be conducted during or after the polyurethane polymerization reaction.

To introduce a hydrophilic group in the second polyurethane prepolymer, a compound, which has at least one active hydrogen atom per one molecule and also has the above hydrophilic group, may be used as an active hydrogen-containing compound. Examples of the compound, which has at least one active hydrogen atom per one molecule and also has the above hydrophilic group, include:

(1) sulfonic acid group-containing compounds such as 2-oxyethanesulfonic acid, phenolsulfonic acid, sulfobenzoic acid, sulfosuccinic acid, 5-sulfoisophthalic acid, sulfanilic acid, 1,3-phenylenediamine-4,6-disulfonic acid, and 2,4-diaminotoluene-5-sulfonic acid, and derivatives thereof, or polyester polyols obtained by copolymerizing them;

(2) carboxylic acid-containing compounds such as 2,2-dimethylolpropionic acid, 2,2-dimethylolbutyric acid, 2,2-dimethylolvaleric acid, dioxymaleic acid, 2,6-dioxybenzoic acid, and 3,4-diaminobenzoic acid, and derivatives thereof, or polyester polyols obtained by copolymerizing them; tertiary amino group-containing compounds such as methyldiethanolamine, butyldiethanolamine, and alkyldiisopropanolamine, and derivatives thereof, or polyester polyol or polyether polyol obtained by copolymerizing them;

(3) reaction products of the above tertiary amino group-containing compounds, or derivatives thereof, or polyester polyols or polyether polyols obtained by copolymerizing them, with quaternizing agents such as methyl chloride, methyl bromide, dimethylsulfuric acid, diethylsulfuric acid, benzyl chloride, benzyl bromide, ethylenechlorohydrin, ethylenebromohydrin, epichlorohydrin, and bromobutane;

(4) nonionic group-containing compounds such as polyoxyethylene glycol or polyoxyethylene-polyoxypropylene copolymer glycol, which has at least 30% by weight of a repeating unit of ethylene oxide and at least one active hydrogen in the polymer and also has a molecular weight of 300 to 20,000, polyoxyethylene-polyoxybutylene copolymer glycol, polyoxyethylene-polyoxyalkylene copolymer glycol, and monoalkyl ether thereof, or polyester-polyether polyols obtained by copolymerizing them; and

(5) combinations thereof.

The term "low solid content polyurethane dispersion," as used herein, refers to a polyurethane dispersion that contains less than 60 percent by weight of polyurethane particles based on the total weight of the polyurethane dispersion. All individual values and subranges in the range of less than 60 weight percent are included herein and disclosed herein; for example, less than 50 weight percent; or in the alternative, less than 40 weight percent. A low solid content polyurethane dispersion may have a volume average particle size diameter; for example, the low solid content polyurethane dispersion may have a volume average particle size diameter in the range of 0.04 to 5.0 $\mu$m (micron). All individual values and subranges from 0.04 to 5.0 $\mu$m (micron) are included herein and disclosed herein; for example, a low solid content polyurethane dispersion may have a volume average particle size diameter in the range of 0.07 to 1.0 $\mu$m (micron); or in the alternative, a low solid content polyurethane dispersion may have a volume average particle size diameter in the range of 0.08 to 0.2 $\mu$m (micron). A low solid content polyurethane dispersion may have any polydispersity; for example, a low solid content polyurethane dispersion may have a polydispersity in the range of 1 to 20. All individual values and subranges from 1 to 20 are included herein and disclosed herein; for example, a low solid content polyurethane dispersion may have a polydispersity in the range of 1 to 10; or in the alternative, a low solid content polyurethane dispersion may have polydispersity in the range of 1 to 2. Any conventional method may be employed to make such low solid content polyurethane dispersions.

The term "seed latex," as used herein refers to dispersions, suspensions, emulsions, or latexes of polyolefins such polyethylene and polypropylene, epoxies, silicon, styrene, acrylate, butadiene, isoprene, vinyl acetate, or copolymers thereof. The term "seed latex," as used herein, may, for example, further refer to emulsions of polyvinyl acetate, polyethylene-vinyl acetate, polyacrylic, or polyacrylic-styrenic; latexes of polystyrene-butadiene, polyacrylonitrile-butadiene, or polyacrylic-butadiene; aqueous dispersions of polyethylene and polyolefin ionomers; or various aqueous dispersions of polyurethane, polyester, polyamide, epoxy resin, copolymers thereof, or alloys thereof. The seed latex may have any volume average particle size diameter; for example, the seed latex may have a volume average particle size diameter in the range of 0.05 to 5.0 $\mu$m (micron). All individual values and subranges from 0.05 to 5.0 $\mu$m (micron) are included herein and disclosed herein; for example, the seed latex may have a volume average particle size diameter in the range of 0.07 to 1.0 $\mu$m (micron); or in the alternative, the seed latex may have a volume average particle size diameter in the range of 0.08 to 0.2 $\mu$m (micron). The seed latex may have a bimodal or multimodal particle size distribution. The seed latex may have any polydispersity; for example, the seed latex may have a polydispersity in the range of 1 to 20. All individual values and subranges from 1 to 20 are included herein and disclosed herein; for example, seed latex may have a polydispersity in the range of 1 to 10; or in the alternative, the seed latex may have a polydispersity in the range of to 2. Any conventional method may be employed to make such dispersions, suspension, emulsions, or latexes. Such conventional methods include, but are not limited to, emulsion polymerization, suspension polymerization, micro-emulsion, mini-emulsion, or dispersion polymerization.

The term "surfactants," as used herein, refers to any compound that reduces surface tension when dissolved in water or water solutions, or that reduces interfacial tension between two liquids, or between a liquid and a solid. Surfactants useful for preparing a stable dispersion in the practice of the present invention may be cationic surfactants, anionic surfactants,

zwitterionic, or a non-ionic surfactants. Examples of anionic surfactants include, but are not limited to, sulfonates, carboxylates, and phosphates. Examples of cationic surfactants include, but are not limited to, quaternary amines. Examples of non-ionic surfactants include, but are not limited to, block copolymers containing ethylene oxide and silicone surfactants, such as ethoxylated alcohol, ethoxylated fatty acid, sorbitan derivative, lanolin derivative, ethoxylated nonyl phenol or alkoxylated polysiloxane. Furthermore, the surfactants can be either external surfactants or internal surfactants. External surfactants are surfactants which do not become chemically reacted into the polymer during dispersion preparation. Examples of external surfactants useful herein include, but are not limited to, salts of dodecyl benzene sulfonic acid, and lauryl sulfonic acid salt. Internal surfactants are surfactants which do become chemically reacted into the polymer during dispersion preparation. Examples of an internal surfactant useful herein include, but are not limited to, 2,2-dimethylol propionic acid and its salts, quaternized ammonium salts, and hydrophilic species, such polyethylene oxide polyols.

Polyurethane prepolymers are typically chain extended via a chain extender. The chain extender according to the invention is a diamine or a mixture of water and diamine.

Examples of the chain extender used in the present invention include ethylenediamine, 1,2-propanediamine, 1,6-hexamethylenediamine, piperazine, 2-methylpiperazine, 2,5-dimethylpiperazine, isophoronediamine, 4,4'-dicyclohexylmethanediamine, 3,3'-dimethyl-4,4'-dicyclohexylmethanediamine, 1,2-cyclohexanediamine, 1,4-cyclohexanediamine, aminoethylethanolamine, aminopropylethanolamine, aminohexylethanolamine, aminoethylpropanolamine, aminopropylpropanolamine, and aminohexylpropanolamine. These chain extenders can be used alone or in combination.

The ultra high-said content polyurethane dispersion maybe produced via continues method; or in the alternative, it maybe produced via batch process.

In production of the ultra high-said content polyurethane dispersion, the method for producing such ultra high-solid content polyurethane dispersion suitable for pressure sensitive adhesive applications includes the following steps: (1) providing a first stream, wherein the first stream comprising a first polyurethane prepolymer comprising the reaction product of a polyol and polyisocyanate; (2) providing a second stream, wherein the second stream being a media phase selected from the group consisting of a seed latex, wherein said seed latex is selected from the group consisting of emulsions of polyvinyl acetate, polyethylene-vinyl acetate, polyacrylic or polyacrylic-styrenic; latexes of polystyrene-butadiene, polyacrylonitrile-butadiene, or polyacrylic-butadiene; aqueous dispersions of polyethylene and polyolefin ionomers; or various aqueous dispersions of polyurethane, polyester, polyamide, epoxy resin, copolymers thereof, or alloys thereof (3) continuously merging the first stream with the second stream optionally in the presence of a chain extender; and (4) thereby forming a polyurethane dispersion having a solid content of at least 60 percent by weight of the solid contents, preferably 65 percent by weight of solid contents, excluding the weight of any filler based on the total weight of the ultra-high solid content polyurethane dispersion, and a viscosity in the range of less than 5 Pa.s (5000 cps) at 20 rpm at 21° C using spindle #4 with Brookfield viscometer.

In an alternative production of the ultra high-said content polyurethane dispersion, the method for producing such high-solid content polyurethane dispersion suitable for pressure sensitive adhesive applications includes the following steps: (1) providing a first stream, wherein the first stream being a first polyurethane prepolymer comprising the reaction product of a polyol and polyisocyanate; (2) providing a second stream, wherein the second stream being a media phase; (3) continuously merging the first and the second stream together optionally in the presence of a surfactant at a temperature in the range of 10°C to 70°C, wherein the ratio of the first stream to the second stream being in the range of 0.1 to 0.6, and wherein the surfactant is optionally present in a concentration range of 0.1 to 3.0 percent, based on the total weight of the first stream, the second stream, and the surfactant; (4) thereby forming the ultra-high solid content polyurethane dispersion, wherein the ultra-high solid content polyurethane dispersion having at least a solid content of at least 60 percent by weight of said solid, preferably 65 percent by weight of solid contents, excluding the weight of any filler, based on the total weight of the ultra-high solid content polyurethane dispersion, and a viscosity in the range of less than 5 Pa.s (5000 cps) at 20 rpm at 21° C using spindle #4 with Brookfield viscometer.

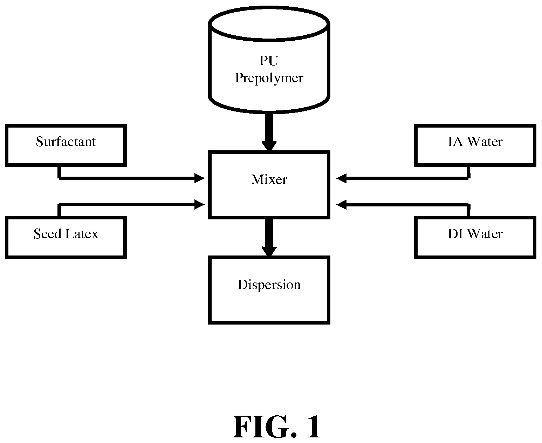

Referring to Fig. 1, a first stream comprising a first polyurethane prepolymer, optionally a surfactant, and optionally water is fed into a mixer, for example an OAKS Mixer or an IKA Mixer or those mixers disclosed in the U.S. Patent Application Serial No. 60/875.657 filed on December 19, 2006, while a second stream comprising a media phase selected from the group consisting of selected from the group consisting of a seed latex, wherein said seed latex is selected from the group consisting of emulsions of polyvinyl acetate, polyethylene-vinyl acetate, polyacrylic or polyacrylic-styrenic; latexes of polystyrene-butadiene, polyacrylonitrile-butadiene, or polyacrylic-butadiene; aqueous dispersions of polyethylene and polyolefin ionomers; or various aqueous dispersions of polyurethane, polyester, polyamide, epoxy resin, copolymers thereof, or alloys thereof is fed into the mixer. First stream and second stream are merged together optionally in the presence of a chain extender, dilution water, and/or combinations thereof. The first stream is emulsified into the second stream via high shear rate mixing thereby forming the ultra-high solid content polyurethane dispersion suitable for pressure sensitive adhesive applications of the instant invention.

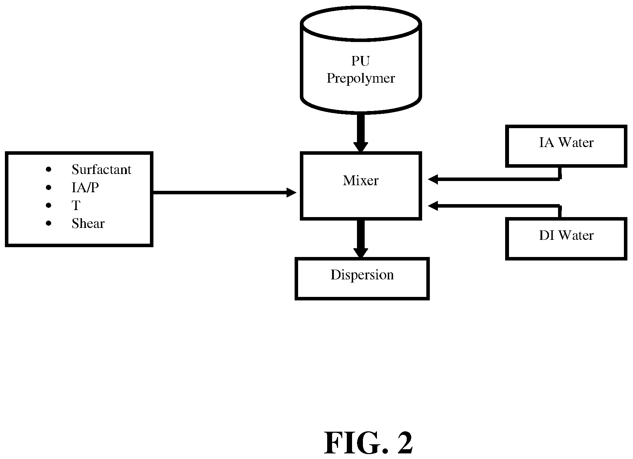

Referring to Fig. 2 a first stream comprising a first polyurethane prepolymer comprising the reaction product of a polyol and polyisocyanate, a surfactant, and water is fed into a mixer, for example an OAKS mixer or an IKA mixer or those mixers disclosed in the U.S. Patent Application Serial No. 60/875.657 filed on December 19, 2006, at a temperature in the range of 10°C to 70°C, a first polyurethane prepolymer to water weight ratio in the range of about 0.3 to 0.5. Sufficient shear rate is provided to facilitate the formation of the ultra-high solid content polyurethane dispersion of the instant invention. Optionally a chain extender, dilution water, and/or combinations thereof may further be fed into the mixer, and merged with the first stream thereby forming the ultra-high solid content polyurethane dispersion suitable for pressure sensitive adhesive compositionapplications of the instant invention.

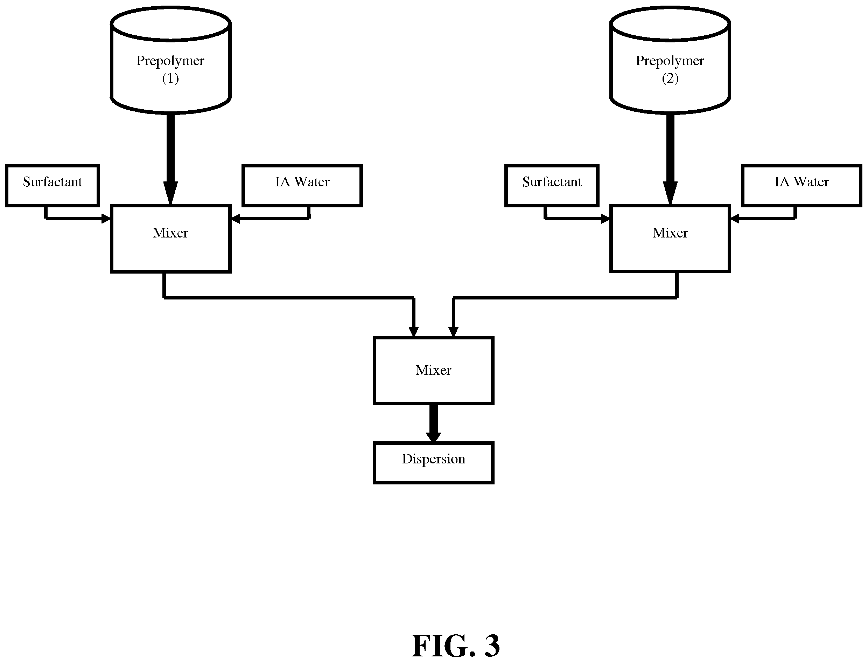

Referring to Fig. 3, a first polyurethane prepolymer comprising the reaction product of a polyol and polyisocyanate, optionally a surfactant, and optionally water are fed into a first mixer, for example an OAKS Mixer or an IKA Mixer or those mixers disclosed in the U.S. Patent Application Serial No. 60/875.657 filed on December 19, 2006, thereby forming a first stream, that is first polyurethane prepolymer or a first polyurethane prepolymer emulsion. A second polyurethane prepolymer, optionally a surfactant, and optionally water are fed into a second mixer, for example an OAKS Mixer or an IKA Mixer or those mixers disclosed in the U.S. Patent Application Serial No. 60/875.657 filed on December 19, 2006, thereby forming a second stream, that is a second polyurethane prepolymer or a second polyurethane prepolymer emulsion. The first stream and second streams are fed into a third mixer, for example an OAKS Mixer or an IKA Mixer or those mixers disclosed in the U.S. Patent Application Serial No. 60/875.657 filed on December 19, 2006, and merged together optionally in the presence of a chain extender, dilution water, or combinations thereof thereby forming a ultra-high solid content polyurethane dispersion suitable for pressure sensitive adhesive composition applications.

In production, the pressure sensitive adhesive composition may be produced via any number of mixing devices. One such device may be a vertical mixing vessel with dual shafts, first shaft comprising a sweep blade and the second shaft comprising a high speed disperser. An ultra-high solid polyurethane dispersion may be added into the vessel. At this time the sweep blade may be started, and subsequently surfactant, thickener, dispersant, freeze-thaw agents, and additive such as a propylene glycol, and plasticizer may be added to the vessel. Once enough material has been added to the vessel such that the high speed disperser blade is covered, then this blade may be started. To this mixture pigments such as titanium dioxide and fillers such as calcium carbonate may be added while maintaining the sweep blade and high speed disperser turned on. Finally, a neutralizing agent such as ammonia may be added to the vessel. Mixing should continue at, for example, 25 °C. until the mixture is thoroughly mixed. The mixture may or may not be vacuumed. Vacuuming of the mixture can occur in any suitable container either in the mixer or outside of the mixer.

### Examples

The present invention will now be explained in further detail by showing Inventive Examples, and Comparative Examples, but the scope of the present invention is not, of course, limited to these Examples.

### First Polyurethane Prepolymer Synthesis

880.5 g of Acclaim 8200 polyol (8200 MW polypropylene oxide diol) is heated to 60 °C. in a reactor, and then, 25 g of polyethyleneoxide diol having a molecular weight of 1000 g/mole,
and 15 g of Tegomer D3403 ™ is charged in to the reactor while the content of the reactor is stirred. To this mixture, 75 g of Isophorone diisocyanate (IPDI) monomer is charged, and the reactor is heated to raise temperature thereof to 80 °C. Finally, 0.1 g of tin catalyst (dibutyl tin dilaurate) is added, and the reactor temperature was maintained at 80 °C. for 4 hours. The final NCO content was 1.28 wt%.

### Seed Latex Formulations

The acrylate latex was UCAR 9042 comprising 56 percent by weight of solid based on the total weight of the acrylate latex. The UCAR 9042 is evaluated for its properties, and those properties are reported in Table I.

### Preparation of First Polyurethane Dispersion

1000 g of first polyurethane prepolymer is fed continuously into a high shear mixer where it is mixed with 69 g of LDS-22 anionic surfactant (linear alkyl dodecyl benzene sulfonate, sodium salt) and 160 g of deionized water. The pre-emulsion is then continuously diluted with 600 g deionized water, and it is simultaneously chain extended with 87.5 g of 10% ethylene diamine (EDA) solution in water. The resulting dispersion has approximately 53 wt% solids. The first polyurethane dispersion is evaluated for its properties, and those properties are reported in Table I.

### Preparation of the First Ultra-High Solid Polyurethane/Acrylate Dispersion (First PU/Acrylate Hybrid Dispersion)

100 grams of the first polyurethane prepolymer is fed into a high shear mixing device where it is emulsified into 200 grams of an acrylate latex, UCAR 9042 (comprising 56 percent by weight of solid based on the total weight of the acrylate latex; available from The Dow Chemical Company) and 30 grams of the first polyurethane dispersion as described hereinabove. The hybrid pre-emulsion is then chain extended with 8.57 g of 10% ethylene diamine (EDA) solution in water. The resulting ultra-high solid content polyurethane/acrylic hybrid dispersion has approximately 66.2 percent by weight of solid particles, excluding the weight of any filler, based on the total weight of the dispersion. The final ratio of urethane to acrylate was 51.5. The first PU/acrylate hybrid dispersion was evaluated for its properties, and those properties are reported in Table I.

**Preparation of the Second Ultra-High Solid Polyurethane/Acrylate Dispersion (Second PU/Acrylate Hybrid Dispersion)**

50 grams of the first polyurethane prepolymer is fed into a high shear mixing device where it is emulsified into 200 grams of an acrylate latex, UCAR 9042 (comprising 56 percent by weight of solid based on the total weight of the acrylate latex; available from The Dow Chemical Company). The hybrid pre-emulsion is then chain extended with 4.4 g of 10% ethylene diamine (EDA) solution in water. The resulting ultra-high solid content polyurethane/acrylic hybrid dispersion has approximately 62.7 percent by weight of solid particles, excluding the weight of any filler, based on the total weight of the dispersion. The final ratio of urethane to acrylate was 31.2. The second PU/acrylate hybrid dispersion was evaluated for its properties, and those properties are reported in Table I.

**Preparation of the Third Ultra-High Solid Polyurethane/Acrylate Dispersion (Third PU/Acrylate Hybrid Dispersion)**

100 grams of the first polyurethane prepolymer is fed into a high shear mixing device where it is emulsified into 200 grams of an acrylate latex, UCAR 9042 (comprising 56 percent by weight of solid based on the total weight of the acrylate latex; available from The Dow Chemical Company). The hybrid pre-emulsion is then chain extended with 8.57 g of 10% ethylene diamine (EDA) solution in water. The resulting ultra-high solid content polyurethane/acrylic hybrid dispersion has approximately 67.7 percent by weight of solid particles, excluding the weight of any filler, based on the total weight of the dispersion. The final ratio of urethane to acrylate was 47.6. The third PU/acrylate hybrid dispersion was evaluated for its properties, and those properties are reported in Table I.

The present invention may be embodied in other forms without departing from the spirit and the essential attributes thereof, and, accordingly, reference should be made to the appended claims, rather than to the foregoing specification, as indicating the scope of the invention.

**Test Methods**

Test methods include the following:
Volume average particle size diameter and particle size distribution are measured via Dynamic Light Scattering (Coulter LS 230).

Viscosity is measured via Brookfield viscometer.

Isocyanate content (%NCO) is determined using a Meter Toledo DL58. In Table I, the 180° Peel is respectively 4.03 kg/cm; 5.11 kg/cm, 6.94 kg/cm and 6.79 kg/cm.

**Table I**

| | Coat Weight | 180' Peel in pounds per linear inch | Loop Tack in pound | Vertical Shear in hrs. |
|---|---|---|---|---|
| Units | $(g/m^2)$ ((g/ 100 $inch^2$)) | (lbs/ linear inch) | (Maximum kgs (lbs) to debond) | (Hours to Failure) |
| Test Conditions and Methods | --- | (24 hr dwell); 45% Relative Humidity & 24.4°C (76°F) (PSTC Test Method 1) | 45% Relative Humidity & 24.4°C (76°F) (PSTC Test Method 5) | 1.27 cm (½") X 1.27 cm (½"), 500g (30 min dwell); 45% Relative Humidity & 24.4°C (76°F) (PSTC Test Method 7) |
| UCARTM 9042 | 23.41 (1.51) | 3.5 | 0.77 (1.70) | -25 |
| First Polyurethane Dispersion | 23.56 (1.52) | | | 38.0 |
| First PU/Acrylic Hybrid Dispersion | 24.34 (1.57) | 4.44 | 1.17 (2.57) | --- |
| Second PU/Acrylic Hybrid Dispersion | 22.32 (1.44) | 6.03 | 1.05 (2.32) | --- |
| Third PU/Acrylic Hybrid Dispersion | 24.03 (1.55) | 5.89 | 0.93 (2.05) | --- |

**Claims**

1. A pressure sensitive adhesive composition comprising:
   an ultra-high solid polyurethane dispersion comprising:

   a first component, wherein said first component comprises a first polyurethane prepolymer comprising the reaction product of a polyol and polyisocyanate;
   a second component, wherein said second component comprises a media phase selected from the group consisting of a seed latex, wherein said seed latex is selected from the group consisting of emulsions of polyvinyl acetate, polyethylene-vinyl acetate, polyacrylic or polyacrylic-styrenic; latexes of polystyrene-butadiene, polyacrylonitrile-butadiene, or polyacrylic-butadiene; aqueous dispersions of polyethylene and polyolefin ionomers; or various aqueous dispersions of polyurethane, polyester, polyamide, epoxy resin, copolymers thereof, or alloys thereof;
   and
   a chain extender, wherein the chain extender is a diamine or a mixture of water and diamine
   wherein said ultra-high solid polyurethane dispersion has a solid content of at least 60 percent by weight of solid content, excluding the weight of any filler, based on the total weight of said ultra-high solid polyurethane dispersion, and a viscosity of less than 5 Pa.s (5000 cps) at 20 rpm at 21° C using spindle #4 with Brookfield viscometer.

2. The pressure sensitive adhesive composition according to Claim 1, wherein said pressure sensitive adhesive composition further comprises one or more surfactants, one or more dispersants, one or more thickeners, one or more pigments, one or more fillers, one or more freeze-thaw agent, one or more neutralizing agents, one or more plasticizers, one or more antioxidants, one or more UV stabilizers, one or more tackifiers, one or more adhesion promoters, and/or combinations thereof.

3. The pressure sensitive adhesive composition according to Claim 2, wherein said pressure sensitive adhesive composition comprises 25 to less than 100 percent by weight of said ultra-high solid polyurethane dispersion, based on the weight of the pressure sensitive adhesive composition.

4. The pressure sensitive adhesive composition according to Claim 2, wherein said pressure sensitive adhesive composition comprises 0.1 to 5 percent by weight of said one or more surfactants, 0.1 to 5 percent by weight of said one or more dispersants, 0.1 to 5 percent by weight of said one or more thickeners, 0 to less than 10 percent by weight of said one or more pigments, 0 to 75 percent by weight of said one or more fillers, 0.1 to 2 percent by weight of said one or more freeze-thaw agents, 0.1 to 1 percent by weight of said one or more neutralizing agents, less than 40 percent by weight of said one or more plasticizers, less than 50 percent by weight of one or more tackifiers, less than 5 percent by weight of one or more adhesion promoters, or any two or more combinations thereof.

5. The pressure sensitive adhesive composition according to Claim 1, wherein said first component comprises one or more first polymer resins and said second component comprising one or more second polymer resins, and wherein said first polymer resin and said second polymer resin have a volume average particle size ratio in the range of 1:5 to 1:2 as measured by Dynamic Light Scattering (Coulter LS 230).

6. The pressure sensitive adhesive composition according to Claim 5, wherein said first polymer resin and said second polymer resin have a volume average particle size ratio in the range of 1:3 as measured by Dynamic Light Scattering(Coulter LS 230).

7. The pressure sensitive adhesive composition according to Claim 1, wherein said seed latex is suspended in water.

8. The pressure sensitive adhesive composition according to Claim 1, wherein said polyisocyanate is aromatic or aliphatic.

9. The pressure sensitive adhesive composition according to Claim 1, wherein said first polyurethane prepolymer is ionic or non-ionic.

10. The pressure sensitive adhesive composition according to Claim 9, wherein said first polyurethane prepolymer is isocyanate terminated or hydroxyl terminated.

11. The pressure sensitive adhesive composition according to Claim 1, wherein said pressure sensitive adhesive composition has a loop tack in the range of greater than 2.0 pounds according to PSTC Test Method 5 under the following conditions: 24 hour dwell; 45% relative humidity; and 24.4°C (76 °F).

12. The pressure sensitive adhesive composition according to Claim 1, wherein said pressure sensitive adhesive composition has 180° Peel in pounds per linear inch (kg/ cm) of greater than 4.0 lbs/ linear inch (4.61 kg/cm) according to PSTC Test Method 1 under the following conditions:
24 hour dwell; 45% relative humidity; and 24.4°C (76 °F).

13. The pressure sensitive adhesive composition according to Claim 1, wherein said pressure sensitive adhesive composition has vertical shear in hours of greater than 26 hours to fail according to PSTC Test Method 7 under the following conditions: 1.27 cm (½") X 1.27 cm (½"), 500g; 30 minute dwell; 45 % relative humidity; and 24.4°C (76 °F).

**Patentansprüche**

1. Eine Haftklebstoffzusammensetzung, die Folgendes beinhaltet:

eine ultrahochfeste Polyurethandispersion, die Folgendes beinhaltet:

eine erste Komponente, wobei die erste Komponente ein erstes Polyurethanpräpolymer beinhaltet, das das Reaktionsprodukt eines Polyols und eines Polyisocyanats beinhaltet;
eine zweite Komponente, wobei die zweite Komponente eine Medienphase beinhaltet, die aus der Gruppe ausgewählt ist, die aus einem Saatlatex besteht, wobei der Saatlatex aus der Gruppe ausgewählt ist, die aus Folgendem besteht:

Emulsionen von Polyvinylacetat, Polyethylenvinylacetat, Polyacrylsäure oder Polyacrylsäure-Styrol; Latizes von Polystyrol-Butadien, Polyacrylnitril-Butadien oder Polyacryl-Butadien; wässrigen Dispersionen von Polyethylen und Polyolefinlonomeren; oder verschiedenen wässrigen Dispersionen von Polyurethan, Polyester, Polyamid, Epoxidharz, Copolymeren davon oder Legierungen davon; und
einen Kettenverlängerer, wobei der Kettenverlängerer ein Diamin oder eine Mischung aus Wasser und Diamin ist,

wobei die ultrahochfeste Polyurethandispersion einen Feststoffgehalt von mindestens 60 Gewichtsprozent des Feststoffgehalts, ausgenommen das Gewicht jeglichen Füllstoffs, bezogen auf das Gesamtgewicht der ultrahochfesten Polyurethandispersion, und eine Viskosität von weniger als 5 Pa.s (5 000 cps) bei 20 U/min bei 21 °C unter Verwendung von Spindel Nr. 4 mit einem Brookfield-Viskosimeter, aufweist.

2. Haftklebstoffzusammensetzung gemäß Anspruch 1, wobei die Haftklebstoffzusammensetzung ferner Folgendes beinhaltet: ein oder mehrere Tenside, ein oder mehrere Dispergiermittel, ein oder mehrere Verdickungsmittel, ein oder mehrere Pigmente, einen oder mehrere Füllstoffe, ein oder mehrere Gefrier-Auftau-Mittel, ein oder mehrere Neutralisationsmittel, ein oder mehrere Weichmacher, ein oder mehrere Antioxidationsmittel, ein oder mehrere UV-Stabilisatoren, ein oder mehrere Klebrigmacher, ein oder mehrere Haftvermittler und/oder Kombinationen davon.

3. Haftklebstoffzusammensetzung gemäß Anspruch 2, wobei die Haftklebstoffzusammensetzung 25 bis weniger als 100 Gewichtsprozent der ultrahochfesten Polyurethandispersion, bezogen auf das Gewicht der Haftklebstoffzusammensetzung, beinhaltet.

4. Haftklebstoffzusammensetzung gemäß Anspruch 2, wobei die Haftklebstoffzusammensetzung Folgendes beinhaltet: 0,1 bis 5 Gewichtsprozent des einen oder der mehreren Tenside, 0,1 bis 5 Gewichtsprozent des einen oder der mehreren Dispergiermittel, 0,1 bis 5 Gewichtsprozent des einen oder der mehreren Verdickungsmittel, 0 bis weniger als 10 Gewichtsprozent des einen oder der mehreren Pigmente, 0 bis 75 Gewichtsprozent des einen oder der mehreren Füllstoffe, 0,1 bis 2 Gewichtsprozent des einen oder der mehreren Gefrier-Auftau-Mittel, 0,1 bis 1 Gewichtsprozent des einen oder der mehreren Neutralisationsmittel, weniger als 40 Gewichtsprozent des einen oder der mehreren Weichmacher, weniger als 50 Gewichtsprozent des einen oder der mehreren Klebrigmacher, weniger als 5 Gewichtsprozent des einen oder der mehreren Haftvermittler oder beliebige zwei oder mehr Kombinationen davon.

**5.** Haftklebstoffzusammensetzung gemäß Anspruch 1, wobei die erste Komponente ein oder mehrere erste Polymerharze beinhaltet und die zweite Komponente ein oder mehrere zweite Polymerharze beinhaltet und wobei das erste Polymerharz und das zweite Polymerharz ein Volumenverhältnis der durchschnittlichen Teilchengröße im Bereich von 1 : 5 bis 1 : 2, wie durch dynamische Lichtstreuung (Coulter LS 230) gemessen, aufweisen.

**6.** Haftklebstoffzusammensetzung gemäß Anspruch 5, wobei das erste Polymerharz und das zweite Polymerharz ein Volumenverhältnis der durchschnittlichen Teilchengröße im Bereich von 1 : 3, wie durch dynamische Lichtstreuung (Coulter LS 230) gemessen, aufweisen.

**7.** Haftklebstoffzusammensetzung gemäß Anspruch 1, wobei der Saatlatex in Wasser suspendiert ist.

**8.** Haftklebstoffzusammensetzung gemäß Anspruch 1, wobei das Polyisocyanat aromatisch oder aliphatisch ist.

**9.** Haftklebstoffzusammensetzung gemäß Anspruch 1, wobei das erste Polyurethanpräpolymer ionisch oder nichtionisch ist.

**10.** Haftklebstoffzusammensetzung gemäß Anspruch 9, wobei das erste Polyurethanpräpolymer mit isocyanatterminiert oder hydroxylterminiert ist.

**11.** Haftklebstoffzusammensetzung gemäß Anspruch 1, wobei die Haftklebstoffzusammensetzung unter den folgenden Bedingungen eine Schtingenhaftung im Bereich von mehr als 2,0 Pfund gemäß dem PSTC-Testverfahren 5 aufweist: 24 Stunden Verweilzeit; 45 % relative Luftfeuchtigkeit; und 24,4 °C (76 °F).

**12.** Haftklebstoffzusammensetzung gemäß Anspruch 1, wobei die Haftklebstoffzusammensetzung unter den folgenden Bedingungen eine 180°-Abziehfestigkeit in Pfund pro linearem Zoll (kg/cm) von mehr als 4,0 lbs/linearem Zoll (4,61 kg/cm) gemäß dem PSTC-Testverfahren 1 aufweist: 24 Stunden Verweilzeit; 45 % relative Luftfeuchtigkeit; und 24,4 °C (76 °F).

**13.** Haftklebstoffzusammensetzung gemäß Anspruch 1, wobei die Haftklebstoffzusammensetzung unter den folgenden Bedingungen eine vertikale Scherung in Stunden von mehr als 26 Stunden zum Versagen gemäß dem PSTC-Testverfahren 7 aufweist: 1,27 cm (1/2") X 1,27 cm (1/2"), 500 g; 30 Minuten Verweilzeit; 45 % relative Luftfeuchtigkeit; und 24,4 °C (76 °F).

**Revendications**

**1.** Une composition d'adhésif sensible à la pression comprenant :

une dispersion de polyuréthane à teneur en matières solides ultra élevée comprenant :

un premier constituant, ledit premier constituant comprenant un premier prépolymère polyuréthane comprenant le produit de réaction d'un polyol et d'un polyisocyanate ;
un deuxième constituant, ledit deuxième constituant comprenant une phase de milieu sélectionnée dans le groupe constitué d'un latex d'ensemencement, ledit latex d'ensemencement étant sélectionné dans le groupe constitué d'émulsions de poly(acétate de vinyle), de poly(éthylène-acétate de vinyle), de polyacrylique ou de poly(acrylique-styrénique) ; de latex de poly(styrène-butadiène), de poly(acrylonitrile-butadiène), ou de poly(acrylique-butadiène) ; de dispersions aqueuses de polyéthylène et d'ionomères polyoléfine ; ou de diverses dispersions aqueuses de polyuréthane, de polyester, de polyamide, de résine époxy, de copolymères de ceux-ci, ou d'alliage de ceux-ci ;
et
un allongeur de chaîne, l'allongeur de chaîne étant une diamine ou un mélange d'eau et d'une diamine,

dans laquelle ladite dispersion de polyuréthane à teneur en matières solides ultra élevée a une teneur en matières solides d'au moins 60 pour cent en poids de teneur en matières solides, à l'exclusion du poids de toute charge, rapporté au poids total de ladite dispersion de polyuréthane à teneur en matières solides ultra élevée, et une viscosité inférieure à 5 Pa.s (5 000 cps) à 20 tpm à 21 °C en utilisant un mobile 4 avec un viscosimètre Brookfield.

**2.** La composition d'adhésif sensible à la pression selon la revendication 1, ladite composition d'adhésif sensible à la pression comprenant en outre un ou plusieurs tensioactifs, un ou plusieurs agents de dispersion, un ou plusieurs épaississants, un ou plusieurs pigments, une ou plusieurs charges, un ou plusieurs agents de congélation/décongélation, un ou plusieurs agents de neutralisation, un ou plusieurs plastifiants, un ou plusieurs antioxydants, un ou plusieurs stabilisants UV, un ou plusieurs agents poisseux, un ou plusieurs promoteurs d'adhérence, et/ou des combinaisons de ceux-ci.

**3.** La composition d'adhésif sensible à la pression selon la revendication 2, ladite composition d'adhésif sensible à la pression comprenant de 25 à moins de 100 pour cent en poids de ladite dispersion de polyuréthane à teneur en matières solides ultra élevée, rapporté au poids de la composition d'adhésif sensible à la pression.

**4.** La composition d'adhésif sensible à la pression selon la revendication 2, ladite composition d'adhésif sensible à la pression comprenant de 0,1 à 5 pour cent en poids desdits un ou plusieurs tensioactifs, de 0,1 à 5 pour cent en poids desdits un ou plusieurs agents de dispersion, de 0,1 à 5 pour cent en poids desdits un ou plusieurs épaississants, de 0 à moins de 10 pour cent en poids desdits un ou plusieurs pigments, de 0 à 75 pour cent en poids desdites une ou plusieurs charges, de 0,1 à 2 pour cent en poids desdits un ou plusieurs agents de congélation/décongélation, de 0,1 à 1 pour cent en poids desdits un ou plusieurs agents de neutralisation, moins de 40 pour cent en poids desdits un ou plusieurs plastifiants, moins de 50 pour cent en poids d'un ou de plusieurs agents poisseux, moins de 5 pour cent en poids d'un ou de plusieurs promoteurs d'adhérence, ou n'importe quelles combinaisons de deux ou plus de ceux-ci.

**5.** La composition d'adhésif sensible à la pression selon la revendication 1, dans laquelle ledit premier constituant comprend une ou plusieurs premières résines polymères et ledit deuxième constituant comprenant une ou plusieurs deuxièmes résines polymères, et dans laquelle ladite première résine polymère et ladite deuxième résine polymère ont un rapport de tailles de particules moyennes en volume compris dans la gamme allant de 1/5 à 1/2 tel que mesuré par diffusion dynamique de la lumière (Coulter LS 230).

**6.** La composition d'adhésif sensible à la pression selon la revendication 5, dans laquelle ladite première résine polymère et ladite deuxième résine polymère ont un rapport de tailles de particules moyennes en volume compris dans la gamme de 1/3 tel que mesuré par diffusion dynamique de la lumière (Coulter LS 230).

**7.** La composition d'adhésif sensible à la pression selon la revendication 1, dans laquelle ledit latex d'ensemencement est en suspension dans de l'eau.

**8.** La composition d'adhésif sensible à la pression selon la revendication 1, dans laquelle ledit polyisocyanate est aromatique ou aliphatique.

**9.** La composition d'adhésif sensible à la pression selon la revendication 1, dans laquelle ledit premier prépolymère polyuréthane est ionique ou non ionique.

**10.** La composition d'adhésif sensible à la pression selon la revendication 9, dans laquelle ledit premier prépolymère polyuréthane est à terminaison isocyanate ou à terminaison hydroxyle.

**11.** La composition d'adhésif sensible à la pression selon la revendication 1, ladite composition d'adhésif sensible à la pression ayant une pégosité à la boucle comprise dans la gamme de plus de 2,0 livres selon la Méthode de test 5 PSTC dans les conditions suivantes : 24 heures de pause ; 45 % d'humidité relative ; et 24,4 °C (76 °F).

**12.** La composition d'adhésif sensible à la pression selon la revendication 1, ladite composition d'adhésif sensible à la pression ayant un pelage à 180° en livres par pouce linéaire (kg/cm) de plus de 4,0 lb/pouce linéaire (4,61 kg/cm) selon la méthode de test 1 PSTC dans les conditions suivantes :
24 heures de pause ; 45 % d'humidité relative ; et 24,4 °C (76 °F).

**13.** La composition d'adhésif sensible à la pression selon la revendication 1, ladite composition d'adhésif sensible à la pression ayant un cisaillement vertical en heures de plus de 26 heures à l'échec selon la Méthode de test 7 PSTC dans les conditions suivantes : 1,27 cm (1/2 po) X 1,27 cm (1/2 po), 500 g ; 30 minutes de pause ; 45 % d'humidité relative ; et 24,4 °C (76 °F).

```
                        ┌──────────┐
                        │    PU    │
                        │Prepolymer│
                        └────┬─────┘
                             │
                             ▼
┌───────────┐          ┌──────────┐          ┌───────────┐
│ Surfactant│─────────▶│          │◀─────────│  IA Water │
└───────────┘          │  Mixer   │          └───────────┘
┌───────────┐          │          │          ┌───────────┐
│ Seed Latex│─────────▶│          │◀─────────│  DI Water │
└───────────┘          └────┬─────┘          └───────────┘
                            │
                            ▼
                       ┌──────────┐
                       │Dispersion│
                       └──────────┘
```

# FIG. 1

PU
Prepolymer

- Surfactant
- IA/P
- T
- Shear

Mixer

IA Water

DI Water

Dispersion

**FIG. 2**

**FIG. 3**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004359887 A
- JP 2001011146 A
- US 4534907 A
- US 4640801 A
- US 6107433 A
- US 6121398 A
- US 6897283 B
- US 6891053 B
- US 6962636 B
- US 6979477 B
- WO 2004020497 A
- WO 2004096744 PCT
- WO 2004096882 PCT
- WO 2004096882 A
- WO 2004096883 PCT
- US 87565706 P